# EUROPEAN PATENT SPECIFICATION

(11) **EP 0 880 437 B1**
(45) Date of publication and mention of the grant of the patent: **27.11.2002**
(21) Application number: 97903832.0
(22) Date of filing: 22.01.1997
(51) Int. Cl.: B32B 27/32, B65D 65/40

(54) **HIGH MODULUS OXYGEN-PERMEABLE MULTILAYER FILM, PACKAGING PROCESS USING SAME, AND PACKAGED PRODUCT COMPRISING SAME**
SAUERSTOFFDURCHLÄSSIGE MEHRSCHICHTFOLIE MIT HOHEM MODUL,VERPACKUNGSVERFAHREN UNTER VERWENDUNG DERSELBEN UND DIESE MEHRSICHTFOLIE ENTHALTENDE VERPACKTE PRODUKTE
FILM MULTICOUCHE PERMEABLE A L'OXYGENE ET AYANT UN MODULE ELEVE, PROCEDE D'EMBALLAGE UTILISANT CE FILM, ET PRODUIT EMBALLE LE COMPRENANT

(30) Priority: 07.02.1996 US 597790
(43) Date of publication of application: 02.12.1998
(73) Proprietor: Cryovac, Inc., Duncan, SC 29334-0464 (US)
(72) Inventor: PATRICK, Ray, Ernest, Pelzer, SC 29669 (US); MOSSBROOK, Mendy, Joyce, Moore, SC 29309 (US)
(74) Representative: Senior, Alan Murray
(86) International application number: US9700694
(87) International publication number: WO97028964

(56) References cited:
- EP-A- 0 265 544
- EP-A- 0 710 546
- WO-A-91/06426
- WO-A-94/25271
- WO-A-96/23823
- FR-A- 2 705 053

## Description

### Field of the Invention

The present invention relates to multilayer films, particularly multilayer films suitable for use as packaging films. The present invention is particularly directed to multilayer films and packaged products using same, wherein the film has a relatively high modulus and a relatively high O₂-transmission rate. The present invention is also directed to the use of such films in the packaging of O₂-sensitive products, such as lettuce, etc.

### Background of the Invention

Multilayer films have been utilized for the packaging of "oxygen-sensitive products", such as lettuce, i.e., products which exhibit lower shelf life in the presence of either too much oxygen in the package, or too little oxygen in the package. In such multilayer films, the O₂-transmission rate, and even the CO₂-transmission rate, are of primary importance, especially in the packaging of such O₂-sensitive products as vegetables, fruits, and cheese. For example, in the packaging of precut lettuce, the presence of too much O₂ in the package results in an enzymatic browning of cut surfaces, known as pink ribbing. On the other hand, if the concentration of O₂ in the package is too low, the lettuce tends to spoil due to anaerobiosis.

One of the commercially-available multilayer films which *has* been used in the packaging of oxygen-sensitive products has an outer heat-resistant layer of an elastomer, such a styrene-butadiene copolymer, and an outer sealant layer of a metallocene-catalyzed ethylene/alpha-olefin copolymer. Although this multilayer film exhibits desired O₂ and CO₂ transmission rates, as well as a desirable stiffness, this multilayer film has been found to exhibit an undesirable level of "curl," thereby exhibiting less-than-desired machinability performance. In form-fill-and-seal machinery ("FFS" machinery), curl causes film threadup problems as well as film tracking problems. Furthermore, in FFS packaging, the presence of the outer heat-resistant elastomer layer restricts package formation to a fin-type backseal, as the metallocene-catalyzed outer film layer does not seal well to the heat-resistant elastomer layer.

It has also been found that there is a pervasive belief among many skilled in the packaging of a variety of products that a heat seal cannot be made using a film having both outer layers of a low melt point polyethylene-based polymer, i.e., including both polyethylene homopolymer as well as ethylene/alpha-olefin copolymers, as it is believed that the hot bar will tend to stick to the film during sealing.

FR 2,705,053 discloses a stretchable food film of two or more layers composed of ethylene-octene copolymers and a styrene-butadiene-styrene or styrene-ethylene-butadiene-styrene rubber copolymer. The film is applicable to the food industry for the packaging of food products.

WO 94/25271 provides a film having a first layer of an elastomer, a second layer of a polyethylene and optionally a third layer of a polyethylene. The film is suitable for packages.

It would be desirable to provide a film which exhibits desirable O₂ and CO₂ transmission rates and a desirable stiffness, while reducing or eliminating the curl of the film, as well as providing a film which is suitable to a lap-type backbeat for FFS packaging, using constant heat as opposed to impulse heating. Since fogging of the package is also a common problem in the packaging of produce and other food products, it would also be desirable that the film resist fogging, in order to provide the consumer with a clear view of the contents of the package, and in order to provide a more aesthetically appealing package, especially in retail applications where product presentation is important. However, those surface active agents which are effective antifog agents tend to interfere with ink adhesion to the film. This detrimental effect occurs because the antifog agent blooms to the outside surface of the package and interferes with the adhesion of the ink to the film. This detriment is significant for packages designed for consumer end use, as the consumer does not find such a package to be appealing if the ink is smeared or if the ink comes off onto other articles or the consumer. Thus, it would be also desirable to provide the film with an antifog agent on an outer film surface which forms the inside surface of the package, while also providing adequate adhesion for printing on the other outer surface of the film, which outer surface serves as the outside surface of the package.

### Summary of the Invention

It has been discovered that curl can be eliminated by providing a film with outer layers of ethylene/alpha-olefin copolymer and an inner layer of elastomer, such as styrene/butadiene copolymer. Furthermore, by providing both outer layers of the film with ethylene/alpha-olefin copolymer, a lap-type backseal can be used in FFS type packaging. It has also been discovered that the homogeneous ethylene/alpha-olefin copolymers (e.g., metallocene-catalysed ethylene/alpha-olefin copolymers) can be provided on one or both outer film layers, in order to provide the film with further enhanced sealing characteristics.

As a first aspect, the present invention provides a multilayer film comprising a first outer layer comprising a first ethylene/alpha-olefin copolymer, wherein the first ethylene/alpha-olefin copolymer comprises homogeneous copolymer; an inner layer comprising thermoplastic elastomer polymer comprising mer units derived from styrene; and a second outer layer comprising a second ethylene/alpha-olefin copolymer; and wherein the inner layer is between the first outer layer and the second outer layer, the inner layer is chemically different from the first outer layer and the second outer layer, and the multilayer film has an O₂-transmission rate of from 5.8 to 579 mm³/m²/s (500 to 50,000 cc/m²/24hr) STP and a modulus of at least 414 MPa (60,000 psi).

More preferably, the multilayer film has an O₂-transmission rate of from 11.6 to 232 mm³/m/²/s (1,000 to 20,000 cc/m² 24 hr) STP; still more preferably from 23 to 116 mm/³/m²/s (2,000 to 10,000 cc/m² 24 hr) STP. More preferably the multilayer film has a modulus of from 414 to 1034 MPa (60,000 to 150,000 psi) still more preferably from 483 to 827 MPa (70,000 to 120,000 psi) and yet still more preferably, from 551 to 689 MPa (80,000 to 100,00 psi).

Preferably the first outer layer further comprises a surface-active agent component comprising at least one member selected from the group consisting of ester of aliphatic alcohol, polyether, polyhydric alcohol, ester of polyhydric aliphatic alcohol, and polyethoxylated aromatic alcohol, wherein the surface-active component is present over the entire outside surface of the first outer layer.

Preferably the first outer layer has a thickness of from 8 to 20µm (0.3 to 0.8 mil) the inner layer has a thickness of from 2.5 to 25 µm (0.1 to 1 mil), the second outer layer has a thickness of from 8 to 20 µm (0.3 to 0.8 mil) and the multilayer film has a total thickness of from 25 to 76 µm (1 to 3 mils). More preferably the inner layer has a thickness of from 10 to 20 µm (0.4 to 0.8 mil).

It has been found that the curl problem can be reduced or eliminated by providing a film having a symmetrical cross-section. That is, providing a multilayer film having a cross-section which is symmetrical in terms of layer arrangement, layer thickness, and layer chemical composition, curl is reduced or eliminated. Of course, some variation, i.e., lack of symmetry, can be present, while still substantially reducing or eliminating the amount of curl which would otherwise result without substantial symmetry, For example, one outer layer can comprise a homogenous ethylene/alpha-olefin copolymer while the other outer layer comprises a heterogeneous ethylene/alpha-olefin copolymer. One outer layer may also contain an antifog agent, while the other layer does not. Such minor variations in the cross-sectional symmetry of the film have not been found to have a particularly detrimental effect on the curl level exhibited by the film. More severe variations are also possible, while obtaining a relatively low curl level. However, the presence of only two layers, such as a first layer comprising an ethylene/alpha-olefin copolymer and a second layer comprising a styrene/butadiene elastomeric copolymer, has been found to exhibit substantial curl, and it is believed that it is the lack of symmetry of such a film which is the cause of the undesirable level of curl.

Preferably, the homogeneous ethylene/alpha-olefin copolymer in the first outer layer is a first homogeneous ethylene/alpha-olefin copolymer, and the second outer layer comprises a second homogeneous ethylene/alpha-olefin copolymer. More preferably, the first homogeneous ethylene/alpha-olefin copolymer has a density of less than 915 kg/m³ (0.915 grams per cubic centimeter), and the second homogeneous ethylene/alpha-olefin copolymer has a density of less than 915 kg/m³ 0.915 grams per cubic centimeter. Still more preferably,
the first homogeneous ethylene/alpha-olefin copolymer comprises ethylene mer in an amount of from 99 to 80 weight percent ethylene, based on copolymer weight, and a first alpha-olefin mer in an amount of from 1 to 20 weight percent, based on copolymer weight, wherein the first alpha-olefin mer comprises at least one member selected from the group consisting of C₄, C₆, and C₈; and, the second homogeneous ethylene/alpha-olefin copolymer comprises ethylene mer in an amount of from 99 to 80 weight percent ethylene, based on copolymer weight, and a second alpha-olefin mer in an amount of from 1 to 20 weight percent, based on copolymer weight, and wherein the second alpha-olefin mer comprises at least one member selected from the group consisting of C₄, C₆, and C₈. Still more preferably,
the first homogeneous ethylene/alpha-olefin copolymer comprises ethylene mer in an amount of from 95 to 85 weight percent, based on copolymer weight, and a first alpha-olefin mer in an amount of from 5 to 15 weight percent, based on copolymer weight, wherein the first alpha-olefin mer comprises at least one member selected from the group consisting of C₈, and a blend of C₆ and C₄, and the second homogeneous ethylene alpha-olefin copolymer comprises ethylene mer in an amount of from 95 to 85 weight percent, based on copolymer weight, and a second alpha-olefin mer in an amount of from 5 to 15 weight percent, based on copolymer weight, wherein the second alpha-olefin mer comprises at least one member selected from the group consisting of C₈ and a blend of C₆ and C₄; and the multilayer film has an _{O2}-tranmission rate of from 23 to 116 mm²/m²/s (2,000 to 10,000 cc/m²/24hr) STP.

Preferably, the inner layer comprises styrene-containing polymer. The inner layer can comprise a blend of styrene homopolymer and styrene/butadiene block copolymer. Preferably, styrene homopolymer is present in an amount of from 5 to 50 weight percent, based on layer weight; more preferably, from 10 to 30 weight percent; still more preferably, from 10 to 20 weight percent; preferably, the balance of the inner layer is styrene/butadiene block copolymer.

The inner layer can be a first inner layer, with the film further comprising a second inner layer and a third inner layer. The second inner layer comprises a first polyolefin and the third inner layer comprises a second polyolefin, with the first inner layer being between the second inner layer and the third inner layer. Preferably, the first polyolefin comprises at least one member selected from the group consisting of propylene homopolymer, and propylene/ethylene copolymer containing ethylene mer in an amount of from 0.1 to 6 weight percent; preferably, the second polyolefin comprises at least one member selected from the group consisting of propylene homopolymer, and propylene/ethylene copolymer containing ethylene mer in an amount of from 0.1 to 6 weight percent.

Preferably, the inner layer is a first inner layer comprising a first styrene-containing polymer, with the multilayer film further comprising a second inner layer comprising polyolefin, and a third inner layer comprising a second styrene-containing polymer. Preferably, the second inner layer of polyolefin is between the first inner layer and the third inner layer; preferably, the polyolefin comprises at least one member of the group consisting of propylene homopolymer, and propylene/ethylene copolymer containing ethylene mer in an amount of from 0.1 to 6 weight.

Preferably, the styrene-containing polymer comprises styrene/butadiene copolymer. Preferably, the styrene/butadiene copolymer comprises styrene/butadiene block copolymer comprising butadiene mer in an amount of from 20 to 40 weight percent, based on block copolymer weight

As a second aspect, the present invention pertains to a packaged product comprising a product packaged in, i.e., surrounded by, a package comprising a multilayer film according to the present invention The product comprises at least one member selected from the group consisting of lettuce, cabbage, broccoli, green beans, cauliflower, spinach, kale, carrot, onion, pepper, corn, radish, endive, chard, chicory, radicchio, greens, peas, squash, escarole, brussel sprout, mushroom, melon and beny. Preferably, the multilayer film is a preferred multilayer film according to the present invention. In the packaged product according to the present invention, preferably the multilayer film has a tear notch, so that the package is an easy-open package. Preferably, the package is a sealed pouch having two end seals and a backseal connecting the two end seals. The backseal can be a fin seal or a lap seal.

The O₂-sensitive product preferably comprises a cut vegetable or fruit comprising at least one member selected from the group consisting of lettuce, cabbage, broccoli, green beans, cauliflower, spinach, kale, carrot, onion, pepper, corn, radish, endive, chard, chicory, radicchio, greens, peas, squash, escarole, brussel sprout, mushroom, melon and berry. Preferably, the O₂-sensitive product comprises a cut vegetable comprising at least one member selected from the group consisting of lettuce, cabbage, broccoli, cauliflower, kale, carrot, onion, radish, endive, chard, chicory, radicchio, and escarole, and the film has an O₂-transmission rate of from 35 to 93 mm²/m²/s (3,000 to 8,000 cc/m²/24hr) STP.

As a third aspect, the present invention is directed to a packaging process for packaging an O₂-sensitive product, comprising: (A) forwarding a supply of a multilayer film according to the invention into a vertical form fill and seal apparatus; (B) passing the film over a collar member of the vertical form fill and seal apparatus, so that substantially vertically-oriented edge portions of the film are adjacent one another, (C) forming a longitudinal seal along at least a segment of the adjacent edge portions of the film, to form a sealed tube segment; (D) collapsing a lower end portion of the sealed tube segment; (E) forming a bottom package seal across the collapsed lower end portion of the sealed tube segment, to fonn a pouch; (F) adding an appropriate quantity of the O₂-sensitive product to the pouch; (G) collapsing an upper end portion of the pouch; and (H) forming a top package seal across the collapsed upper end portion to form a sealed pouch containing the oxygen-sensitive product, whereby a package is formed. The multilayer film is a film according to the multilayer film of the present invention, preferably, a preferred multilayer film according to the present invention. The product is an O2-sensitive product as in the packaged product according to the present invention. Preferably, the vertical form fill and seal machine forms, fills, and seals at least 15 packages per minute, without substantial bum through of the film at the seals. Preferably, the film is sealed at a temperature of from 70°C to 150°C.

### Brief Description of the Drawings

Figure 1 illustrates an enlarged cross-sectional view of a three-layer multilayer film of the present invention.

Figure 2 illustrates an enlarged cross-sectional view of a five-layer multilayer film according to the present invention.

Figure 3 illustrates a schematic view of a process according to the present invention.

Figure 4 illustrates a vertical form fill and seal apparatus to be used in packaging process according to the present invention.

Figure 5 illustrates a packaged product of the present invention, the product being packaged in the multilayer film of the present invention.

### Detailed Description of the Invention

As used herein, the term "monomer" refers to a relatively simple compound, usually containing carbon and of low molecular weight, which can react to form a polymer by combination with itself or with other similar molecules or compounds.

As used herein, the term "comonomer" refers to a monomer which is copolymerized with at least one different monomer in a copolymerization reaction, the result of which is a copolymer.

As used herein, the term "polymer" refers to the product of a polymerization reaction, and is inclusive of liomopolymers, copolymers, terpolymers, etc.

As used herein, the term "homopolymer" is used with reference to a polymer resulting from the polymerization of a single monomer, i.e., a polymer consisting essentially of a single type of repeating unit.

As used herein, the term "copolymer" refers to polymers formed by the polymerization reaction of at least two different monomers. For example, the term "copolymer" includes the copolymerization reaction product of ethylene and an alpha-olefin, such as 1-hexene. However, the term "copolymer" is also inclusive of, for example, the copolymerization of a mixture of ethylene, propylene, 1-hexene, and 1-octane.

As used herein, the term "copolymerization" refers to the simultaneous polymerization of two or more monomers.

As used herein, terminology employing a "/" with respect to the chemical identity of a copolymer (e.g., "an ethylene/alpha-olefin copolymer"), identifies the comonomers which are copolymerized to produce the copolymer. This terminology, as used herein, refers to the primary comonomer first, followed by the secondary comonomer. The copolymerization is preferably carried out in the presence of more (on a weight percent basis) of the primary comonomer than the secondary comonomer.

As used herein, the phrase "heterogeneous polymer" refers to polymerization reaction products of relatively wide variation in molecular weight and relatively wide variation in composition distribution, i.e., polymers made, for example, using conventional Ziegler-Natta catalysts. Such polymers typically contain a relatively wide variety of chain lengths and comonomer percentages.

As used herein, the phrase "heterogeneous catalyst" refers to a catalyst suitable for use in the polymerization of heterogeneous polymers, as defined above. Heterogeneous catalysts are comprised of several kinds of active sites which differ in Lewis acidity and steric environment. Ziegler-Natta catalysts are heterogeneous catalysts. Examples of Ziegler-Natta heterogeneous systems include metal halides activated by an organometallic cocatalyst, such as titanium chloride, optionally containing magnesium chloride, complexed to trialkyl aluminum and may be found in patents such as U.S. Patent No. 4,302,565, to GOEKE, et. al., and U.S. Patent No. 4,302,566, to KAROL, et al.,.

As used herein, the phrase "homogeneous polymer" refers to polymerization reaction products of relatively narrow molecular weight distribution and relatively narrow composition distribution. Homogeneous polymers are useful in various layers of the multilayer film used in the present invention. Homogeneous polymers exhibit a relatively even sequencing of comonomers within a chain, the mirroring of sequence distnbution in all chains, and the similarity of length of all chains, and are typically prepared using metallocene, or other single-site type catalysis.

More particularly, homogeneous ethylene/alpha-olefin copolymers may be charactetized by one or more methods known to those of skill in the art, such as molecular weight distribution (M_{w}/Mₙ), composition distribution breadth index (CDBI), and narrow melting point range and single melt point behavior. The molecular weight distribution (M_{w}/Mₙ), also known as polydispersity, may be determined by gel permeation chromatography. The homogeneous ethylene/alpha-olefin copolymers useful in this invention will have a (M_{w}/Mₙ) of less than 2.7. Preferably, the (M_{w}/Mₙ) will have a range of 1.9 to 2.5. More preferably, the (M_{w}/Mₙ) will have a range of 1.9 to 2.3. The composition distribution breadth index (CDBI) of such homogeneous ethylene/alpha-olefin copolymers will generally be greater than 70 percent. The CDBI is defined as the weight percent of the copolymer molecules having a comonomer content within 50 percent (i.e., plus or minus 50%) of the median total molar comonomer content. The CDBI of linear polyethylene. which does not contain a comonomer, is defined to be 100%. The Composition Distribution Breadth Index (CDBI) is determined via the technique of Temperature Rising Elution Fractionation (TREF). CDBI determination dearly distinguishes the homogeneous copolymers used in the present invention (narrow composition distribution as assessed by CDBI values generally above 70%) from heterogeneous polymers such as VLDPEs available commercially which generally have a broad composition distribution as assessed by CDBI values generally less than 55%. The CDBI of a copolymer is readily calculated from data obtained from techniques known in the art, such as, for example, temperature rising elution fractionation as described, for example, in Wild et al., J. Poly. Sci. Poly. Phys. Ed., Vol. 20, p.441 (1982). Preferably, the homogeneous ethylene/alpha-olefin copolymers have a CDBI greater than 70%, i.e., a CDBI of from 70% to 99%. In general, the homogeneous ethylene/alpha-olefin copolymers in the multilayer films of the present invention also exhibit a relatively narrow melting point range, in comparison with "heterogeneous copolymers", i.e., polymers having a CDBI of less than 55%. Preferably, the homogeneous ethylene/alpha-olefin copolymers exhibit an essentially singular melting point characteristic, with a peak melting point (Tₘ), as determined by Differential Scanning Colorimetry (DSC), of from 60°C to 110°C. Preferably, the homogeneous copolymer has a DSC peak Tₘ of from 90°C to 110°C. As used herein, the phrase "essentially single melting point" means that at least about 80%, by weight, of the material corresponds to a single Tₘ peak at a temperature within the range of from 60°C to 130°C, and essentially no substantial fraction of the material has a peak melting point in excess of about 115°C., as determined by DSC analysis. DSC measurements are made on a Perkin Elmer System 7 Thermal Analysis System. Melting information reported are second melting data, i.e., the sample is heated at a programmed rate of 10°C./min. to a temperature below its critical range. The sample is then reheated (2nd melting) at a programmed rate of 10°C/min.

A homogeneous ethylene/alpha-olefin copolymer can, in general, be prepared by the copolymerization of ethylene and any one or more alpha-olefin. Preferably, the alpha-olefin is a C₃-C₂₀ a-monoolefin, more preferably, a C₄-C₁₂ a-monoolefin, more preferably, a C₄-C₈ a-monoolefin. Still more preferably, the alpha-olefin comprises at least one member selected from the group consisting of butene-1, hexene-1, and octene-1, i.e., 1-butene, 1-hexene, and 1-octene, respectively. Yet still most preferably, the alpha-olefin comprises octene-1, and/or a blend of hexene-1 and butene-1.

Processes for preparing homogeneous polymers are disclosed in U.S. Patent No. 5,206,075, U.S. Patent No. 5,241,031, and PCT International Application WO 93/03093. Further details regarding the production and use of one species of homogeneous ethylene/alpha-olefin copolymers is disclosed in U.S. Patent No. 5,206,075, to HODGSON, Jr.; U.S. Patent No. 5,241,031, to MEHTA; PCT International Publication Number WO 93/03093, in the name of Exxon Chemical Company, PCT International Publication Number WO 90/03414, in the name of Exxon Chemical Patents, Inc. Still another species of homogeneous ethylene/alpha-olefin copolymers, generally referred to as long-chain-branched homogeneous ethylene/alpha-olefin copolymers, is disclosed in U.S. Patent No. 5,272,236, to LAI, et. al., and U.S. Patent No. 5,278,272, to LAI, et al.

As used herein, the term "polyolefin" refers to any polymerized olefin, which can be linear, branched, cyclic, aliphatic, aromatic, substituted, or unsubstituted.

As used herein, the phrases "inner layer" and "internal layer" refer to any film having its two principal surfaces with other layers of the multilayer film.

As used herein, the phrase "outer layer" refers to any film layer, of a multilayer film, having only one of its principal surfaces directly adhered to another layer of the film.

As used herein, the phrase "directly adhered", as applied to film layers, is defined as adhesion of the subject film layer to the object film layer, without a tie layer, adhesive, or other layer therebetween. In contrast, as used herein, the word "between", as applied to a film layer expressed as being between two other specified layers, includes both direct adherence of the subject layer between to the two other layers it is between, as well as including a lack of direct adherence to either or both of the two other layers the subject layer is between, i.e., one or more additional layers can be imposed between the subject layer and one or more of the layers the subject layer is between.

As used herein, the term "core", and the phrase "core layer", as applied to multilayer films, refer to any internal film layer which has a primary function other than serving as an adhesive or compatibilizer for adhering two layers to one another. Usually, the core layer or layers provide the multilayer film with a desired level of strength, i.e., modulus.

As used herein, the phrase "sealant layer", with respect to multilayer films, refers to an outer film layer which is involved in the sealing of the film to itself or another layer. Although the phrase "sealant layer" as herein used refers only to outer film layers, no matter how thin, it should also be recognized that in general, the outer 12.5 to 25 µm (0.5 mil to 1.0 mil) of a film is involved in the sealing of the film to itself or another layer. With respect to packages having only fin-type seals, as opposed to lap seals, the phrase "sealant layer" generally refers to the inside film layer of a package, as well as supporting layers adjacent this sealant layer often being sealed to itself, and frequently serving as a food contact layer in the packaging of foods.

As used herein, the phrase "tie layer" refers to any internal layer having the primary purpose of adhering two layers to one another.

As used herein, the term "lamination", and the phrase "laminated film", refer to the process, and resulting product, made by bonding together two or more layers of film or other materials. Lamination can be accomplished by joining layers with adhesives, joining with heat and pressure, and even spread coating and extrusion coating. Multilayer films can be made via coextrusion and/or lamination.

As used herein, the term "extrusion" is used with reference to the process of forming continuous shapes by forcing a molten plastic material through a die, followed by cooling or chemical hardening. Immediately prior to extrusion through the die, the relatively high-viscosity polymeric material is fed into a rotating screw of variable pitch, which forces it through the die.

As used herein, the term "coextrusion" refers to the process of extruding two or more materials through a single die with two or more orifices arranged so that the extrudates merge and weld together into a laminar structure before chilling, i.e., quenching. Coextrusion can be employed in film blowing, free film extrusion, and extrusion coating processes.

As used herein, the phrase "machine direction", herein abbreviated "MD", refers to a direction "along the length" of the film, i.e., in the direction of the film as the film is formed during extrusion and/or coating.

As used herein, the phrase "transverse direction", herein abbreviated "TD", refers to a direction across the film, perpendicular to the machine or longitudinal direction.

As used herein, "O₂-transmission rate", also referred to as "OTR" and "oxygen permeability", is measured according to ASTM D 3985, a test known to those of skill in the film art.

As used herein, the "melt index" of a polymer is the amount, in grams, of a thermoplastic resin which can be forced through an orifice of 2.0955 mm (0.0825 inch) diameter when subjected to a force of 2160 grams in ten minutes at a specified temperature, e.g., 190°C for many polymers. The test is performed by an extrusion rheometer described in ASTM D 1238.

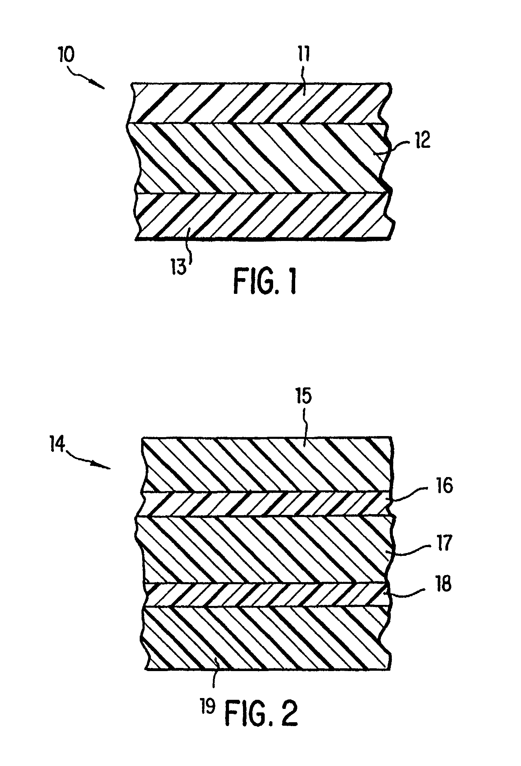

Figure 1 illustrates a cross-sectional view of a preferred embodiment of multilayer film 10 of the present invention. The film comprises first layer 11 (an outer layer), second layer 12 (a core layer), and third layer 13 (also an outer layer). Preferably, the first and third layers 11 and 13 are designed to serve as sealing layers, i.e, comprise a polymer suitable for forming a seal via the application of heat or radiation, as is known to those of skill in the art

The film of the present invention comprises at least 3 layers. The two outer layers function as sealing layers, while the sole core layer, or at least one of a plurality of inner layers, provides the multilayer film with a desired tensile properties, while permitting a desired level of transmission of oxygen and carbon dioxide therethrough. Preferably, the film comprises from 3 to 15 layers, and more preferably, from 3 to 7 layers, and still more preferably, from 3 to 5 layers. Preferably, the outer layers, i.e., the first and third layers, are of substantially identical chemical composition and are of substantially identical thickness. In general, the core layer should be at least as thick as each of the outer layers, and preferably the core layer is thicker than either of the outer layers.

Although the multilayer film of the present invention can have any total thickness which provides a desired rate of oxygen and carbon dioxide transmission, abuse resistance, tensile strength, etc., preferably, the multilayer film of the present invention has a total thickness (i.e., a combined thickness of all layers), of from 12.5 to 25 µm (0.5 to 10 mils) (1 mil equals 0.001 inch); more preferably, from 25 to 127 µm (1 to 5 mils); still more preferably, from 25 to 76 µm (1 to 3 mils); yet still more preferably, from 25 to 64 µm (1 to 2.5 mils). Most preferably, the multilayer film has a thickness of from 38 to 51 µm (1.5 to 2 mils).

Preferably, in the multilayer film of the present invention, the two outer layers each make up from 10 to 80 weight percent of the total weight of the multilayer film. Furthermore, the second, or core layer, can also make up from about 10 to 80 weight percent of the total weight of the film. More preferably, the two outer layers each make up from 10 to 40 weight percent of the total weight of the multilayer film, and preferably the core layer makes up from 20 to 80 weight percent of the total weight of the multilayer film.

Preferably, the outer film layers each have a thickness of from 1 to 102 µm (0.05 to 4 mils), more preferably, from 2.5 to 51 µm (0.1 mil to 2 mils); still more preferably, from 2.5 to 30 µm (0.1 mil to 1.2 mils); yet still more preferably, from 8 to 20 µm (0.3 mil to 0.8 mil); even yet still more preferably, from 10 to 13 µm (0.4 to 0.5 mil).

Preferably, the inner layer (or each of a plurality of inner layers) has a thickness of from 2.5 to 102 µm (0.1 mil to 4 mils); more preferably, from 5 to 51 µm (0.2 mil to 2 mils); still more preferably, from 13 to 25 µm (0.5 mil to 1 mil).

Preferably, the multilayer film of the present invention has an O₂-transmission rate of from 5.8 to 579 mm³/m²/s (500 to 50,000 cc/m²/ 24hr) STP; more preferably, from 11.6 to 232 mm³/m²/s (1,000 to 20,000 cc/m²/ 24hr) STP; still more preferably, from 23 to 116 mm³/m²/s (2,000 to 10,000 cc/m²/ 24hr) STP; even yet still more preferably, from 35 to 93 mm³/m²/s (3,000 to 8,000 cc/m²/24hr) STP.

At least one of the outer film layers comprises a homogeneous ethylene/alpha-olefin copolymer which permits the multilayer film to have an O₂-transmission rate of from 5.8 to 579 mm³/m²/s (500 to 50,000 cc/m²/ 24hr) STP. Although the outer film layers, i.e., layers 10 and 13 in the preferred embodiment illustrated in Figure 1, can have the same or differing chemical composition, preferably the outer layers comprise substantially identical ethylene/alpha-olefin copolymer, more preferably, each comprises a homogeneous ethylene/alpha-olefin copolymer substantially identical to the other. Preferably, the ethylene/alpha-olefin copolymer in the outer layers has a density of less than or equal to 915 kg/m³ (0.915 g/cc), i.e., up to and including 915 kg/m³ (0.915 g/cc). Preferably, an antifog agent is present on the outer surface of an outer film layer which later becomes the inside layer of the package. If the package is printed, preferably the printing is on the outer surface of the other outer film layer which forms the outside layer of the package.

Homogeneous ethylene/alpha-olefin copolymers may be characterized by one or more methods known to those of skill in the art, such as molecular weight distribution (M_{w}/Mₙ), composition distribution breadth index (CDBI), and narrow melting point range and single melt point behavior. The molecular weight distribution (M_{w}/Mₙ), also known as polydispersity, may be determined by gel permeation chromatography. The homogeneous ethylene/alpha-olefin copolymers useful in this invention will have a (M_{w}/Mₙ) of less than 2.7. Preferably, the (M_{w}/Mₙ) will have a range of 1.9 to 2.5. More preferably, the (M_{w}/Mₙ) will have a range of 1.9 to 2.3.

The composition distribution breadth index (CDBI) of such homogeneous ethylene/alpha-olefin copolymers will generally be greater than 70 percent. The CDBI is defined as the weight percent of the copolymer molecules having a comonomer content within 50 percent (i.e., plus or minus 50%) of the median total molar comonomer content. The CDBI of linear polyethylene, which does not contain a comonomer, is defined to be 100%.

The Composition Distribution Breadth Index (CDBI) is determined via the technique of Temperature Rising Elution Fractionation (TREF). CDBI determination clearly distinguishes the homogeneous copolymers used in the present invention (narrow composition distribution as assessed by CDBI values generally above 70%) from commercially available heterogeneous polymers commonly referred to as VLDPEs, which differ from homogeneous polymer in having a broad composition distribution as assessed by CDBI values generally less than 55%. The CDBI of a copolymer is readily calculated from data obtained from techniques known in the art, such as, for example, temperature rising elution fractionation as described, for example, in Wild et. al., J. Poly. Sci. Poly. Phys. Ed., Vol. 20, p.441 (1982). Preferably, the homogeneous ethylene/alpha-olefin copolymers to be used in the film according to the present invention have a CDBI greater than 70%, i.e., a CDBI of from 70% to 99%.

In general, the homogeneous ethylene/alpha-olefin copolymers in the multilayer films of the present invention also exhibit a relatively narrow melting point range, in comparison with "heterogeneous copolymers", i.e., polymers having a CDBI of less than 55%. Preferably, the homogeneous ethylene/alpha-olefin copolymers exhibit an essentially singular melting point characteristic, with a peak melting point (Tₘ), as determined by Differential Scanning Colorimetry (DSC), of from 60°C to 110°C. Preferably the homogeneous copolymer has a DSC peak Tₘ of from 85°C to 105°C. As used herein, the phrase "essentially single melting point" means that at least about 80%, by weight, of the material corresponds to a single Tₘ peak at a temperature within the range of from 60°C to 110°C, and essentially no substantial fraction of the material has a peak melting point in excess of 115°C., as determined by DSC analysis. The presence of higher melting peaks is detrimental to film properties such as haze, and compromises the chances for meaningful reduction in the seal initiation temperature of the final film. DSC measurements are made on a Perkin Elmer System 7 Thermal Analysis System. Melting information reported are second melting data, i.e., the sample is heated at a programmed rate of 10°C./min. to a temperature below its critical range. The sample is then reheated (2nd melting) at a progammed rate of 10°C/min.

The homogeneous ethylene/alpha-olefin copolymer in the outer layers can, in general, be prepared by the copolymerization of ethylene and any one or more alpha-olefin. Preferably, the alpha-olefin is a C₃-C₂₀ a-monoolefin, more preferably, a C₄-C₁₂ a-monoolefin, still more preferably, a C₄-C₈ a-monoolefin. Still more preferably, the alpha-olefin comprises at least one member selected from the group consisting of butene-1, hexene-1, and octene-1, i.e., 1-butene, 1-hexene, and 1-octene, respectively. Most preferably, the alpha-olefin comprises octene-1, and/or a blend of hexene-1 and butene-1.

In general, the ethylene/alpha-olefin copolymer comprises a copolymer resulting from the copolymerization of from 80 to 99 weight percent ethylene and from 1 to 20 weight percent alpha-olefin. Preferably, the ethylene/alpha-olefin copolymer comprises a copolymer resulting from the copolymerization of from 85 to 95 weight percent ethylene and from 5 to 15 weight percent alpha-olefin.

The outer layers can consist essentially of the homogeneous ethylene/alpha-olefin copolymer (or copolymers), or can have still additional polymers blended therewith. However, in each of the outer layers, the homogeneous ethylene/alpha-olefin is preferably present in an amount of at least 50 weight percent, based on the weight of the respective outer layer. More preferably, the homogeneous ethylene/alpha-olefin is present in an amount of at least 75 weight percent, based on the weight of the respective outer layer. Still more preferably, the homogeneous ethylene/alpha-olefin is present in an amount of about 100 weight percent, based on the weight of the respective outer layer. If another polymer, i.e., a "secondary polymer", is present in admixture with the homogeneous ethylenelalpha-olefin copolymer, preferably this secondary polymer comprises at least one member selected from the group consisting of polyethylene, ethylene vinyl acetate, ethylene methyl acrylate, ethylene butyl acrylate, ethylene methyl acrylic acid, ionomer, and ethylene/alpha-olefin.

Preferably, the first film layer is directly adhered to a first side of the second film layer, and the third film layer is directly adhered to a second side of the second film layer.

The homogeneous ethylene/alpha-olefin copolymers can be prepared through the use of a metallocene catalyst, and/or any additional single site catalyst. Furthermore, the homogeneous ethylene/alpha-olefin copolymers can be prepared in accordance with any suitable polymerization process, including slurry polymerization, gas phase polymerization, and high pressure polymerization processes. U.S. Patent No. 5,206,075, U.S. Patent No. 5,241,031, and PCT International Application WO 93/03093.

Slurry polymerization processes generally use superatmospheric pressures and temperatures in the range of 40°-100°C. In a slurry polymerization, a suspension of solid, particulate polymer is formed in a liquid polymerization medium to which ethylene and comonomers and often hydrogen along with catalyst are added. The liquid employed in the polymerization medium can be an alkane, cycloalkane, or an aromatic hydrocarbon such as toluene, ethylbenzene or xylene. The medium employed should be liquid under the conditions of polymerization, and relatively inert. Preferably, hexane or toluene is employed.

Alternatively, the homogeneous ethylene/alpha-olefin copolymer is prepared by gas-phase polymerization. A gas-phase polymerization process utilizes super-atmospheric pressure and temperature in the range of 50°-120°C. Gas phase polymerization can be performed in a stirred or fluidized bed of catalyst and product particles in a pressure vessel adapted to permit the separation of product particles from unreacted gases. Ethylene, comonomer, hydrogen and an inert diluent gas such as nitrogen can be introduced or recirculated so as to maintain the particles at temperatures of 50°-120°C. Triethylaluminum may be added as needed as a scavenger of water, oxygen, and other impurities. Polymer product can be withdrawn continuously or semicontinuously, at a rate such as to maintain a constant product inventory in the reactor. After polymerization and deactivation of the catalyst, the product polymer can be recovered by any suitable means. In commercial practice, the polymer product can be recovered directly from the gas phase reactor, freed of residual monomer with a nitrogen purge, and used without further deactivation or catalyst removal.

The homogeneous ethylene/alpha-olefin copolymer can also be produced by a high pressure process, in the presence of a catalyst system comprising a cyclopentadienyl-transition metal compound and an alumoxane compound It is important, in the highpressure process, that the polymerization temperature be above 120°C., but below the decomposition temperature of the polymer product. It is also important that the polymerization pressure be above 50 MPa (500 bar (kg/cm²)). In those situations wherein the molecular weight of the polymer product that would be produced at a given set of operating conditions is higher than desired, any of the techniques known in the art for control of molecular weight, such as the use of hydrogen or reactor temperature, may be used in the process of this invention. Further details regarding the production and use of linear homogeneous ethylene/alpha-olefin copolymer are disclosed in U.S. Patent No. 5,206,075, to HODGSON, Jr.; U.S. Patent No. 5,241,031, to MEHTA; PCT International Publication Number WO 93/03093, in the name of Exxon Chemical Company; PCT International Publication Number WO 90/03414, in the name of Exxon Chemical Patents, Inc. Details of the production of substantially linear long chain branched homogeneous ethylene/alpha-olefin copolymers is disclosed in U.S. Patent No. 5,272,236, to LAI, et. al., and U.S. Patent No. 5,278,272, to LAI, et. al.

Although the multilayer film of the present invention can have a plurality of inner layers, including a plurality of tie layers as well as a plurality of core layers, in one preferred embodiment, the multilayer film of the present invention has no tie layers, and only one core layer as the sole inner layer of the film.

In Figure 1, core layer 12 comprises a thermoplastic elastomer. As used herein, the phrase "thermoplastic elastomer" refers to a family of polymers which resemble elastomers in that they are highly resilient and can be repeatedly stretched to at least twice their initial lengths with full, rapid recovery, but are true thermoplastics and thus do not require curing or vulcanization as do most rubbers. Preferred thermoplastic elastomers for use in the present invention include styrene-containing polymers, more preferably styrene/butadiene copolymer.

Preferably, the core layer comprises a styrene-containing elastomeric polymer. Styrene/butadiene block copolymer is a preferred styrene-containing elastomeric polymer. A blend of styrene homopolymer and styrene/butadiene block copolymer is a preferred blend for use in the core layer. Preferably, the blend comprises 5-50% styrene homopolymer, with the balance being styrene-butadiene block copolymer; more preferably, 10-30% styrene homopolymer, still more preferably, 10-20% styrene homopolymer. Preferably, the styrene/butadiene copolymer comprises styrene/butadiene block copolymer comprising butadiene mer in an amount of from 20 to 40 weight percent, based on block copolymer weight.

As with the homogeneous ethylene/alpha-olefin copolymer polymer of the outer layers of the multilayer film. of the present invention, the polymer or polymers in the inner layer, including both core layers as well as tie layers, can be produced in accordance with any suitable polymerization process, including slurry polymerization, gas phase polymerization, and high pressure polymerization processes, as discussed in above, in detail. Furthermore, in addition other catalysts, the polymer(s) in core and/or tie layer or layers can be prepared through the use of a single site catalyst, such as a metallocene catalyst, as discussed above.

Figure 2 illustrates a cross-sectional view of a five-layer film 14 according to the present invention, which is an alternative of the preferred multilayer film illustrated in Figure 1. In Figure 2, multilayer film 14 is composed of five layers, including first layer 15, second layer 16, third layer 17, fourth layer 18, and fifth layer 19. First layer 15, and fifth layer 19, which are outer layers, are both designed to serve as sealing layers. Inner second layer 16 and inner fourth layer 18 can be polyethylene-based layers, e.g., can comprise an ethylene/alpha-olefin copolymer or propylene/ethylene copolymer, or can be designed to serve as tie layers, or can be high modulus elastomer-containing layers. Third layer 17, also an inner layer, can be a high modulus elastomer containing layer, or a polyethylene-based layer, or even a tie layer. If an antifog agent is used in the film, i.e., a surface active agent, it should be present on an outer surface of an outer film layer which later becomes the inside layer of the package. If the package is printed, the printing is on the outer surface of the other outer film layer, which forms the outside layer of the package.

Although most preferably the multilayer film of the present invention does not comprise a tie layer, in general, the multilayer film of the present invention can comprise one or more tie layers. In general, the tie layer or layers may comprise any polymer which adheres to both the layers which the tie layer is tying together. The composition, number, and thickness of the tie layer or layers are as known to those of skill in the art of films. Tie layers need be only thick enough to effectuate the desired tying function Preferably, the thickness of the tie layers is from 0.025 to 13 µm (0.001 to 0.5 mil.), more preferably from 0.25 to 10 µm (0.01 to 0.4 mil.), and most preferably from 2.5 to 8 µm (0.1 to 0.3 mil).

The polymer components used to fabricate multilayer films according to the present invention may also contain appropriate amounts of other additives normally included in such compositions. These include slip agents such as talc, antioxidants, fillers, dyes, pigments and dyes, radiation stabilizers, antistatic agents, elastomers, and the like additives known to those of skill in the art of packaging films. The presence of an antifog agent is a particularly preferred additive for at least one of the outer layers.

Multilayer films in accordance with the present invention can be manufactured using film fabrication technologies well-known in the art. For example, the base film may be extruded into a film using a flat die, or extruded into a film using an annular die, and the heat seal layer formed thereon by solvent deposition, lamination or coextrusion techniques. However, the preferred method of manufacture of the multilayer film of the present invention is via simultaneous coextrusion, in an annular die, of all the layers of the multilayer film, including the outer (sealing) layers, the core layer, and optionally, the one or more tie layers.

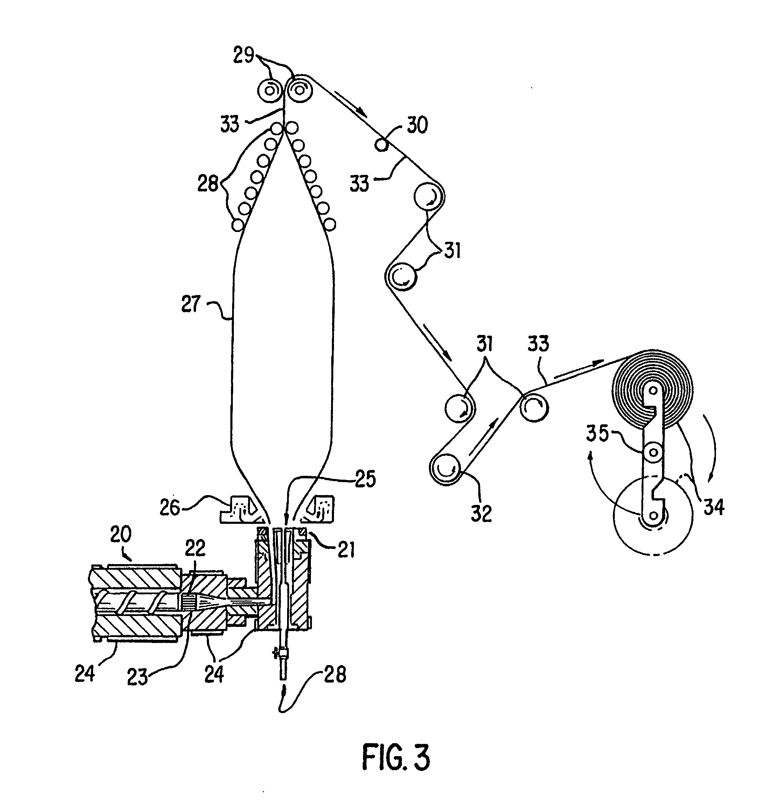

Figure 3 illustrates a schematic view of a process according for making the film according to the present invention, i.e., either multilayer film 10 or multilayer film 14, both of which are in accordance with the present invention. Although for the sake of simplicity only one extruder 20 is illustrated in Figure 3, there are preferably at least 2 extruders, and more preferably, at least three extruders. That is, preferably at least one extruder, and more preferably two extruders, supply molten polymer to coextrusion die 21 for the formation of, for example, outer layers 11 and 13 as illustrated in Figure 1, and at least one additional extruder supplied molten polymer to coextrusion die 21 for the formation of, for example, core layer 12 as illustrated in Figure 1. Each of the extruders is supplied with polymer pellets suitable for the formation of the respective layer it is extruding. The extruders subject the polymer pellets to sufficient pressure and heat to melt the polymer and thereby prepare it for extrusion through a die.

Taking extruder 20 as an example, each of the extruders is preferably equipped with a screen pack 22, a breaker plate 23, and a plurality of heaters 24. Each of the coextruded film layers is extruded between mandrel 25 and die 21, and the extrudate is cooled by cool air flowing from air ring 26. The resulting blown bubble is thereafter guided into a collapsed configuration by nip rolls 29, via guide rolls 28. The collapsed tube is optionally passed over treater bar 30, and is thereafter passed over idler rolls 31, and around dancer roll 32 which imparts tension control to collapsed tube 33, after which the collapsed tube is wound into roll 34 via winding mechanism 35.

Although the multilayer film of the present invention is preferably not irradiated, optionally the film may be irradiated. In the irradiation process, the film is subjected the film to an energetic radiation treatment, such as corona discharge, plasma, flame, ultraviolet, X-ray, gamma ray, beta ray, and high energy electron treatment, which induce cross-linking between molecules of the irradiated material.

Radiation dosages are referred to herein in terms of the radiation unit "RAD", with one million RADS, also known as a megarad, being designated as "MR". A suitable radiation dosage of high energy electrons is in the range of up to 120 Gy (12 MR), more preferably 20 to 90 Gy (2 to 9 MR), and still more preferably, about 30 Gy (3 MR). Preferably, irradiation is carried out by an electron accelerator and the dosage level is determined by standard dosimetry methods.

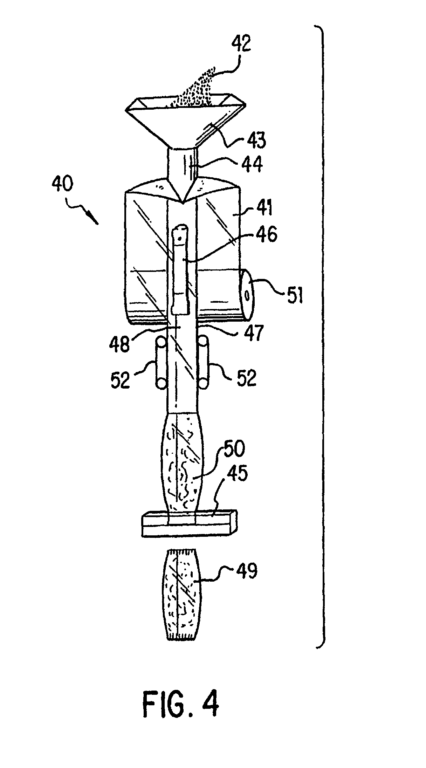

Figure 4 illustrates a vertical form fill and seal apparatus to be used in packaging process according to the present invention. Vertical form fill and seal equipment is well known to those of skill in the packaging arts. The following documents disclose a variety of equipment suitable for vertical form fill and seal: U.S. Patent No. 2,956,383; U.S. Patent No. 3,340,129 to J.J. GREVICH; U.S. Patent No. 3,611,657, to KIYOSHI INOUE, et. al.; U.S. Patent No. 3,703,396, to INOUE, et. al.; U.S. Patent No. 4,103,473, to BAST, et. al.; U.S. Patent No. 4,506,494, to SHIMOYAMA, et. al.; U.S. Patent No. 4,589,247, to ; U.S. Patent No. 4,532,752, to TAYLOR; U.S. Patent No. 4,532,753, to KOVACS; U.S. Patent No. 4,571,926, to SCULLY; and Great Britain Patent Specification No. 1 334 616, to de GROOT, et. al.

In Figure 4, a vertical form fill and seal apparatus 40 is schematically illustrated. Apparatus 40 utilizes multilayer film 41 according to the present invention. Product 42, to be packaged, is supplied to apparatus 40 from a source (not illustrated), from which a predetermined quantity of product 42 reaches upper end portion of forming tube 44 via funnel 43, or other conventional means. The packages are formed in a lower portion of apparatus 40, and flexible sheet material 41 from which the bags or packages are formed is fed from roll 51 over certain forming bars (not illustrated), is wrapped about forming tube 44, and is provided with longitudinal seal 47 by longitudinal heat sealing device 46, resulting in the formation of vertically-oriented tube 48. End seal bars 45 operate to close and seal horizontally across the lower end of vertically-sealed tube 48, to form pouch 50 which is thereafter immediately packed with product 42. Film drive belts 52, powered and directed by rollers, as illustrated, advance tube 48 and pouch 50 a predetermined distance, after which end seal bars 45 close and simultaneously seal horizontally across the lower end of vertically-sealed tube 48 as well as simultaneously sealing horizontally across upper end of sealed pouch 49, to form a product packaged in sealed pouch 49. The next pouch 50, thereabove, is then filled with a metered quantity of product 42, forwarded, and so on. It is also conventional to incorporate with the end seal bars a cut-off knife (not shown) which operates to sever a lower sealed pouch 49 from the bottom of upstream pouch 50.

In carrying out the packaging process of the present invention, preferably the vertical form fill and seal machine forms, fills, and seals at least 15 packages per minute, preferably from about 15 to 45 packages per minute, without substantial burn through of the film at the seals.

Although the packaging process may be carried out with any film according to the present invention, the packaging process is preferably carried out using a preferred film according to the present invention. Preferably, the film is sealed at the lowest possible temperature at which relatively strong seals are produced. In general, the film is sealed at a temperature of from 70°C to 150°C.; more preferably, from 80°C to 140°C, and still more preferably, from 90°C to 130°C.

In general, the packaging process is carried out with the packaging of an oxygen-sensitive product. Preferably, the oxygen-sensitive product comprises at least one cut vegetable or fruit selected from the group consisting of lettuce, cabbage, broccoli, green beans, cauliflower, spinach, kale, carrot, onion, pepper, corn, radish, endive, chard, chicory, radicchio, greens, peas, squash, escarole, brussel sprout, mushroom, melons and berries; more preferably, at least one member selected from the group consisting of lettuce, cabbage, broccoli, cauliflower, kales carrot, onion, radish, endive, chard, chicory, radicchio, and escarole, where the film has an oxygen permeability of from 23 to 116 mm³/m²/s (2000 to 10,000 cc/m²/24hr) STP.

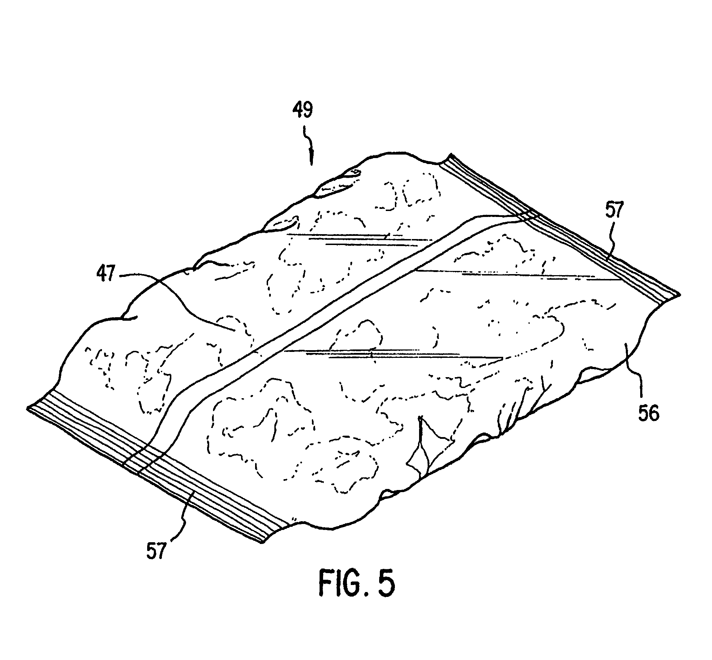

Figure 5 illustrates one embodiment of a packaged product 49 of the present invention, the product being packaged in sealed pouch 56 having vertical seal 47 and end seals 57. Package 56 is a multilayer film of the present invention as produced in a vertical form fill and seal apparatus, in accordance with the present invention as described above.

In general, the product in the package can be any oxygen-sensitive product, as described above. Preferably, the oxygen-sensitive product comprises at least one cut vegetable selected from the group consisting of lettuce, cabbage, broccoli, green beans, cauliflower, spinach, kale, carrot, onion, pepper, corn, radish, endive, chard, chicory, radicchio, greens, peas, squash, escarole, brussel sprout, mushroom, melons and berries; more preferably, at least one member selected from the group consisting of lettuce, cabbage, broccoli, cauliflower, kale, carrot, onion, radish, endive, chard, chicory, radicchio, and escarole, where the film has an oxygen permeability of from 23 to 116 mm³/m²/s (2000 to 10,000 cc/mil/m²/24hr) STP., and, still more preferably, an oxygen permeability of from 35 to 93 mm³/m²/s (3000 to 8000 cc/m²/ 24hr) STP.

The invention is illustrated by the following examples, which are provided for the purpose of representation, and are not to be construed as limiting the scope of the invention. Unless stated otherwise, all percentages, parts, etc. are by weight.

### Examples 1 - 6

A series of coextruded, multilayer films were produced on conventional hot blown film equipment using a multilayer annular die, to produce films having an A/B/A-type structure. The films had average thicknesses of from about 38 to 51 µm (1.5 to 2.0 mils). Each outer layer A was designed to serve as a sealing layer. Each outer layer was composed of a AFFINITY PL 1880 (TM) metallocene-catalyzed ethylene/octene copolymer having a density of about 902 kg/m³ (0.902 gm/cc), and a melt index of about 1.0 g/10 min (using Condition E of ASTM D-1238). obtained from The Dow Chemical Co., 2040 Dow Center, Midland, MI 48674 (hereinafter referred to as "MCPE1"). Each outer layer had an average thickness of about 13 µm (0.5 mils). For each of the outer film layers A, MCPE1 was preblended with a "masterbatch," i.e., either: (a) FSU93E (TM) slip/antiblock concentrate, obtained from A. Schulman of Akron, Ohio (hereinafter, "MB1"), or (b) FSU255E (TM) slip/antiblock concentrate, also obtained from A Schulman of Akron, Ohio (hereinafter, "MB2"). The masterbatch was added to each outer layer, in an amount of about 4 weight percent, based on weight of the outer layer. The slip and antiblock agents served to provide easy separation of the film plys at the winder, and for good machinability on the VFFS packaging equipment.

The B-layer, i.e., the only inner film layer, contained a styrene/butadiene copolymer or a blend of styrene-butadiene copolymer and homogeneous polystyrene. Two styrene/butadiene copolymers were evaluated, the first (i.e., "SBCI") being KK36 (TM) styrene/butadiene copolymer having 75 percent by weight styrene, a melt index of 8.0 (Condition G of ASTM D-1238) and a density of 1010 kg/m³ (1.01 g/cc), obtained from Phillips 66 Company, of Pasadena, Texas. The second styrene/butadiene copolymer evaluated (i.e., "SBC2") was STYROLUX 684D ®, obtained from BASF Corporation of 3000 Continental Drive, N., Mount Olive, N.J. The STYROLUX 684D ® had a density of 1010 kg/m³ (1.01 g/cc) and a melt index of 8.5 g/10 min (using Condition G of ASTM method D-1238).

The polymer formulations for the A-layers and B-layer were then fed into the hoppers of extruders which fed an annular coextrusion die. The materials were coextruded through the die, exited the die, and were blown to a desired width while simultaneously being cooled with an air ring. The cooled film was then collapsed, ply separated, and wound on cores for further processing.

Table I, below, provides the structure, total thickness and layer thicknesses, for each of the films of Examples 14. Table II provides the longitudinal and transverse modulus, kinetic coefficient of friction, haze, gloss, and transmission rate data.

### Examples 7-9

A series of coextruded, multilayer films were produced on conventional hot blown film equipment equipped with a multilayer annular die, to produce films having an A/B/C/B/A-type structure. The films had average total thicknesses of from about 38 to 51 µm (1.5 to 2.0 mils). For each film, each outer layer A served as a sealing layer and was composed of MCPE in an amount of about 96 weight percent, based on weight of the outer layer. Each outer layer A had an average thickness of about 13 µm (0.5 mils). For each of the outer film layers, the metallocene-catalyzed polyethylene was preblended with MB1 (in an amount of about 4 weight percent, based on weight of the outer layer. MB1 served to allow easy separation of the film plys at the winder, and for good machinability on the VFFS packaging equipment. Each of the B-layers contained SBC-1 in an amount of 100 weight percent, based on weight of the layer. The C-layer contained ESCORENE PD 9302 ® propylene/ethylene copolymer (hereinafter "EPC"), obtained from the Exxon Chemical Company, of Houston, Texas. This EPC had an ethylene content of about 3.3 weight percent (based on weight of EPC), a density of 895 kg/m³ (0.895), and a melt flow rate of 3.8 g/10 min (Condition L of ASTM D-1238). The C layer contained EPC in an amount of about 100 weight percent, based on weight of the layer.

The polymer formulations for the A-layers, B-layers and C-layer were then fed into the hoppers of extruders which fed the coextrusion die. The materials were coextruded through an annular coextrusion die, exited the die, and were blown to a desired width while simultaneously being cooled with an air ring The cooled film was then collapsed, ply-separated, and wound onto cores for further processing.

For Examples 7-9, Table I, below, provides the structure, total thickness and layer thicknesses; and Table II provides the longitudinal and transverse modulus, kinetic coefficient of friction, haze, gloss, and transmission rate data.

### Examples 10 & 11 (Comparative)

Two coextruded, multilayer films were produced on conventional hot blown film equipment equipped with a multilayer annular die, to produce films having an A/B/A-type structure. The films had average thicknesses of 46 µm (1.8 mils) and 33 µm (1.3 mils) respectively. For each film, the two outer layers A, each of which served as a sealing layer, were each composed of MCPE1 (96 weight percent) and MB1 (4 weight percent). As for the films of Examples 1-6, MB1 was added to allow easy separation of the film plys at the winder, and for good machinability on the VFFS packaging equipment. The B-layer, i.e., the only inner layer in the films of Examples 10 and 11, was composed of 100 percent EPC.

The polymer formulations for the A-layers and Slayer were then fed into the hoppers of extruders which fed an annular coextrusion die. The materials were coextruded through the die, exited the die, and were blown to a desired width while simultaneously being cooled with an air ring. The cooled film was then collapsed, ply- separated, and wound on cores for further processing. For Examples 10 and 11, Table I, below, provides the structure, total thickness and various layer thicknesses, and Table II provides the longitudinal and transverse modulus, kinectic coefficient of friction, haze, gloss, and transmission rate data.

**TABLE I**

| Film of Example No. | Film Layer Composition & Structure | Film Layer Thickness (mils) µm |
|---|---|---|
| 1 | 96%MCPE1 + 4%MB1 /SBC1 / 96%MCPE1 + 4%MB1 | (5/.7/.5) 13/18/13 |
| 2 | 95%MCPE1 + 5%MB2 / SBC1 / 95%MCPE1 + 5%MB2 | (.5/.5/.5) 13/13/13 |
| 3 | 94%MCPE1 + 6%MB1 / SBC1 /94%MCPE1 + 6%MB1 | (.5/.7/.5) 13/18/13 |
| 4 | 95%MCPE1 + 5%MB1 / SBC1 /95%MCPE1 + 5%MB1 | (.5/.7/.5) 13/18/13 |
| 5 | 95%MCPE1 +5%MB1 / SBC2 / 95%MCPE1 + 5%MB1 | (.6/.9/.5) 15/23/13 |
| 6 | 95% MCPE1 + 5% MB1 / 90%SBC2 + 10%PS / 95%MCPE1 + 5%MB1 | (.5/.8/.5) 13/20/13 |
| 7 | 95%MCPE1 + 5%MB1/ SBC1 / EPC / SBC1 / 95%MCPE1 + 5%MB1 | (.3/.1/.7/.1/.3) 8/2.5/18/2.5/8 |
| 8 | 95%MCPE1 + 5%MB1/ SBC1 / EPC / SBC1 / 95%MCPE1 + 5%MB1 | (.4/.3/.8/.3/.3) 10/8/20/8/8 |
| 9 | 95%MCPE1 + 5%MB1/ SBC1 / EPC / SBC1 / 95%MCPE1 +5%MB1 | (.3/.2/.5/.2/.3) 8/5/13/5/8 |
| 10 | 96%MCPE1 + 4%MB1 / EPC / 96%MCPE1 + 4%MB1 | (.5/.8/.5) 13/20/13 |
| 11 | 96%MCPE1 + 4%MB1 / EPC / 96%MCPE1 + 4%MB1 | (.4/.5/.4) 10/13/10 |

**TABLE II**

| Ex. No. | Longitudinal Modulus (psi) MPa) | Transverse Modulus (psi) MPa | Kinetic COF | Haze (%) | Gloss (at 45°) | O₂TR (cc/m2 24hr.) mm³/m²/s STP | CO₂TR (cc/m2 24hr.) mm³/m²/s STP | MVTR (g/100 in 2 24hr. STP) |
|---|---|---|---|---|---|---|---|---|
| 1 | (90,0000) 620 | (69,000) 476 | 0.17 | 6.1 | 73 | (7,300) 84 | (25,000) 290 | 1.8 |
| 2 | (76,000) 524 | (55,000) 379 | 0.13 | 11.9 | 60 | (6,500) 75 | (23,000) 266 | 1.5 |
| 3 | (99,000) 682 | (74,000) 510 | 0.12 | 6.0 | 74 | (7,200) 83 | (25,000) 290 | 1.6 |
| 4 | (93,000) 641 | (72,000) 496 | 0.44 | 4.3 | 77 | (7,800) 90 | (25,000) 290 | 1.9 |
| 5 | (110,000) 758 | (90,000) 620 | 0.43 | 6.5 | 73 | (5,900) 68 | (23,000) 266 | 1.6 |
| 6 | (112,000) 772 | (88,000) 607 | 0.43 | 6.3 | 71 | (6,600) 76 | (24,000) 278 | 1.9 |
| 7 | (87,000) 600 | (75,000) 517 | 0.17 | 6.4 | 72 | (3,700) 43 | (14,000) 162 | 0.81 |
| 8 | (106,00) 731 | (85,000) 586 | 0.36 | 5.9 | 75 | (3,200) 37 | (13,000) 150 | 0.74 |
| 9 | (87,000) 600 | (67,000) 462 | 0.36 | 5.6 | 74 | (5,600) 65 | (17,000) 197 | 1.2 |
| 10 | (54,000) 372 | (54,000) 372 | 0.13 | 6.3 | 70 | (4,600) 53 | (14,000) 162 | 0.72 |
| 11 | (48,000) 331 | (52,000) 358 | 0.14 | 6.4 | 68 | (6,900) 80 | (18,000) 208 | 1.01 |

Tables III and IV, below, O₂-concentration data (Table III), and CO₂-concentration data (Table IV) taken from two independent evaluations of the films of Examples 3, 5, 6, and 11. In both studies, one pound broccoli florets were packaged in the films, for the purpose of ascertaining and comparing the product shelf-life in the films. In both cases, materials containing styrene/butadiene copolymer in the core, i.e., the films of Examples 3, 5, and 6, were effective in maintaining good product quality while providing the desired aesthetics and machinability properties needed for a retail application of a packaged product prepared using a vertical-form-fill-and-seal ("VFFS") process. The analysis of packaged products utilizing the films of Examples 3, 5, and 6 revealed ideal gas transmission rates, with particular regard for carbon dioxide and water vapor transmission rates. Studies suggest that the best product quality, in terms of appearance, flavor, and odor, is obtained if throughout the self-life there is an average O₂-concentration of 1 to 3 percent, and an average CO₂-concentration of 5 to 10 percent. It is believed that these properties are of significant benefit to extending the shelf-life of highly perishable commodities such as fresh-cut broccoli.

As is apparent from the data set forth in Table III, the O₂-concentration of the various packages was similar, with the differences, in most cases, having no statistical significance. However, as set forth in Table IV, the CO₂-concentrations inside the packages utilizing the films of Examples 3, 5, and 6 range from about 40 to 59 percent of the CO₂-concentration inside the package made using the film of comparative Example 11. This result is advantageous for the films according to the present invention, since a high CO₂-concentration in a packages produces an in off-flavor as well as an off-odor. In fact, during the study it was observed that packages made from the comparative film of Example 11 developed an off-odor faster and more pronounced than packages made from the films of Examples 3, 5, and 6. Also, it was noticed that packages made from films of Examples 3, 5, and 6 had significantly less moisture therein, because of their higher water vapor transmission rate which prevents slime growth on the product.

**TABLE III**

| (Percent Mean O₂-Concentration Measured in One Pound Samples of Broccoli Florets Packaged in Various Films and Stored at 4.4°C 40°F) | | | | |
|---|---|---|---|---|
| Elapsed Days | Film of Example 3 | Film of Example 5 | Film of Example 6 | Film of Example 11 |
| 3 | 1.2 | 1.6 | 1.2 | 1.2 |
| 7 | 1.5 | 1.1 | 1.2 | 1.1 |
| 14 | 20 | 1.3 | 1.2 | 1.1 |

**TABLE IV**

| (Percent Mean CO₂-Concentration Measured in One Pound Samples of Broccoli Florets Packaged in Various Films and Stored at 4.4°C 40°F) | | | | |
|---|---|---|---|---|
| Elapsed Days | Film of Example 3 | Film of Example 5 | Film of Example 6 | Film of Example 11 |
| 3 | 5.7 | 7.1 | 6.8 | 12 |
| 7 | 5.0 | 5.2 | 4.6 | 11 |
| | | | | |
| 14 | 4.3 | 4.6 | 3.8 | 9.6 |

In addition to the O₂ and CO₂ concentration data provided immediately above, "machinability" tests were also performed. These machinability tests were designed to determine how the film performed in FFS machinery. From the machinabilty test results, which were qualitative, it was determined that films possessing a modulus of from about 551 to 689 MPa (80,000 to 100,000 psi) and a coefficient of friction ("COF") less than 0.4, performed best in terms of formability and tracking. Formability refers to the ability of the film to form around the forming tube without wrinkling; tracking refers to the ability of the film to be forwarded through the FFS without the side edges of the film "wandering" to a degree that the back seal cannot consistently be formed.

The films of Examples 3, 5, 6, 10 and 11 were compared on a Hayssen Ultima CMB model 12/19HPR vertical FFS machine. All films performed acceptably. However, the films of Examples 3, 5 and 6 out-performed film of comparative Examples 10 and 11, i.e., in terms of forming and tracking. The films of Examples 3, 5 and 6 layed flatter on the seal bars, and therefore, relative to the films of comparative Examples 10 and 11, had significantly fewer wrinkles in the seal areas. Furthermore, relative to the films of comparative Examples 10 and 11, the films of Examples 3, 5, and 6 exhibited superior tracking, resulting in a more consistent back seal. However, in order to seal through wrinkles when they occurred, the films of Examples 3, 5, and 6 did require either (a) a longer sealing time, or (b) more heat. The film of Example 3 machined slightly better than the films of Examples 5 and 6, because the film of Example 3 had a lower coefficient of friction.

Table V, below, provides the commercial name, density, melt index, and supplier identity for various resins used in the above examples.

**TABLE V**

| Component Identity | Commercial Name | Density (g/cc) kg/m³ | Melt Index (g/10min) | Supplier Identity |
|---|---|---|---|---|
| MCPE1 | AFFINITY | 902 (0.902) | 1.0 (ASTMD- | The Dow Chemical |
| | PL 1880 (TM) | | 1238 condition E) | Co., 2040 Dow Center, Midland, MI 48674 |
| MCPE2 | EXACT 3028 (TM) | ― | ― | Exxon Chemical Co. P.O. Box 3272 Houston, TX 77253-3272 |
| EPC | ESCORENE® PD 9302 | (0.895) 895 | 3.8 (ASTM D-1238 condition L) | Exxon Chemical Co. P.O. Box 3272 Houston, TX 77253-3272 |
| SBC1 | K-Resin® KK36 | (1.01) 1010 | 7.5 (ASTMD-1238 condition G) | Phillips 66 Co. P.O. Box 58966 Houston, TX 77258-8966 |
| SBC2 | Styrolux® 684D | (1.01) 1010 | 8.5 (ASTM D-1238 condition G) | BASF Corporation 3000 Continental Drive, N. Mount Olive, NJ 07828 |
| SBC 3 | KRO5 Styrene Butadiene copolymer | ― | | Phillips 66 Co. P.O. Box 58966 Houston, TX 77258-8966 |
| MB1 | POLYBATCH ® FSU-93-E | (1.10) 1100 | 11 (ASTMD-1238 Condition E) | A. Schulman, Inc. Akron, Ohio |
| MB2 | POLYBATCH ® FSU-255E | (1.15) 1150 | No Data | A. Schulman, Inc. Akron, Ohio |

### Example 12 (Comparative)

A multilayer film produced by Cypress Packaging, Inc. of Rochester, N.Y. was obtained and compared with the a film according to the present invention, more particularly, the films of Examples 3, 5, and 6, above. The comparative film, from Cypress Packaging, Inc., was believed to be the same as, or substantially the same as, the film disclosed in Example 2 of PCT WO 94/25271, in the name of Cypress Packaging, Inc., published 10 Nov. 1994, naming D.C. Fischer et al. as inventors. Table VI, below, provides the arrangement and composition of the various film layers, as well as the OTR of the comparative film.

| Film of Example No. | Film Layer Composition and Structure | Film Layer Thickness µm (mils) | OTR (cc/m²/day (STP)) mm³/m²/s |
|---|---|---|---|
| 12 | SBC3/MCPE2/adhesive/MCPE2 | 18/5/2.5/25 (0.7/0.2/0.10/1.0) | (5600) 65 |

The film of Example 12 (comparative) has been reported as often being difficult to machine as a result of edge curl, which has been discovered to be directly related to the asymmetrical nature of this film. Additionally, the edge curl prevents film splicing and complicates film threading as a result of poor film flatness. Fin sealing is also required as a result of the asymmetry of this comparative structure; the film of Example 12 (comparative) was not suitable for the formation of a lap seal. Relative to lap seals, fin seals are more difficult to make, and require greater film width to compensate for any inconsistencies in film tracking. The edge curl of this comparative film caused the film to exhibit diminished consistency of back seal formation, resulting in missed seals or insufficient sealing area.

In contrast, the film of Examples 3, 5, and 6 of the present invention is symmetrical and flat. It spliced and threaded easily, and could be used for the formation of lap seals. There is a predominant opinion in the produce and vertical equipment industries that materials comprising polyethylene as the outer layer of the package are not machinable on vertical FFS systems equipped with constant heal seal bars because of the belief that such structures would adhere to the seal bar limiting if not preventing the ability to seal. This phenomenon is overcome by the use of TEFLON ® polytetrafluoroethylene coated seal bars and air cooling of the seal area following seal initiation. This allows for constant heat sealing of a balanced structure comprised of ethylene/alpha-olefin copolymer as outer layers of the film. Sealing is determined by the interaction of time, temperature, and pressure. The film of the invention requires less seal time and temperature -3.8 to 10°C (25° to 50° F) than the comparative material.

## Claims

1. A multilayer film, comprising:
(A) a first outer layer comprising a first ethylene/alpha-olefin copolymer, wherein the first ethylene/alpha-olefin copolymer comprises homogeneous copolymer,
(B) an inner layer comprising thermoplastic elastomer polymer comprising mer units derived from styrene; and
(C) a second outer layer comprising a second ethylene/alpha-olefin copolymer, and
wherein the inner layer is between the first outer layer and the second outer layer, the inner layer is chemically different from the first outer layer and the second outer layer, and the multilayer film has an O₂-transmission rate of from 5.8 to 579 mm³/m²/s (500 to 50,000 cc/m²/24hr) STP and a modulus of at least 414 MPa (60,000 psi).

2. A multilayer film according to claim 1, wherein a surface-active agent component comprising at least one member selected from the group consisting of ester of aliphatic alcohol, polyether, polyhydric alcohol, ester of polyhydric aliphatic alcohol, and polyethoxylated aromatic alcohol is present on the outside surface of the first outer layer.

3. A multilayer film according to claim 1 or 2, which has a modulus of from 483 to 827 MPa (70,000 to 120,000 psi).

4. A multilayer film according to claim 3, which has a modulus of from 551 to 689 MPa (80,000 to 100,000 psi).

5. A multilayer film according to any one of the preceding claims wherein the first outer layer has a thickness from 1 to 102 µm (0.05 to 4 mils), the inner layer has a thickness from 3 to 10 µm (0.1 to 0.4 mils), the second outer layer has a thickness from 1 to 102 µm (0.05 to 4 mils) and the multilayer film has a total thickness from 13 to 254 µm (0.5 to 10 mils).

6. A multilayer film according to claim 5, wherein the first outer layer has a thickness of from 8 to 20 µm (0.3 to 0.8 mils), the inner layer has a thickness of from 2.5 to 25 µm (0.1 to 1 mil), the second outer layer has a thickness of from 8 to 20 µm (0.3 to 0.8 mil), and the multilayer film has a total thickness of from 25 to 76 µm (1 to 3 mils).

7. A multilayer film according to claim 6, wherein the inner layer has a thickness of from 10 to 20 µm (0.4 to 0.8 mil).

8. A multilayer film according to any one of the preceding claims wherein the second outer layer comprises a homogeneous ethylenelalpha-olefin copolymer.

9. A multilayer film according to any one of the preceding claims wherein the homogeneous ethylene/alpha-olefin copolymer has a density of less than 0.915 grams per cubic centimetre.

10. A multilayer film according to any one of the preceding claims wherein:
the homogeneous ethylene/alpha-olefin copolymer comprises ethylene mer in an amount of from 99 to 80 weight percent ethylene, based on copolymer weight, and a first alpha-olefin mer in an amount of from 1 to 20 weight percent, based on copolymer weight, and wherein the first alpha-olefin mer comprises at least C₄, C₆ or C₈ alpha-olefin.

11. A multilayer film according to claim 10, wherein:
the homogeneous ethylene/alpha-olefin copolymer comprises ethylene mer in an amount of from 95 to 85 weight percent, based on copolymer weight, and a first alpha-olefin mer in an amount of from 5 to 15 weight percent, based on copolymer weight, wherein the first alpha-olefin mer comprises at least C₈ alpha-olefin or a blend of C₆ and C₄ alpha-olefin.

12. A multilayer film according to any one of the preceding claims which has an O₂-transmission rate of from 23 to 116 mm²/m²/s (2,000 to 10,000 cc/m²/24hr) STP.

13. A film according to any one of the preceding claims wherein the inner layer consists essentially of the thermoplastic elastomer polymer comprising mer units derived from styrene.

14. A multilayer film according to any one of the preceding claims wherein the polymer comprising mer units derived from styrene comprises styrene/butadiene copolymer.

15. A multilayer film according to claim 14 wherein the styrene/butadiene copolymer comprises styrene/butadiene block copolymer comprising from 20 to 40 weight percent mer units derived from butadiene.

16. A multilayer film according to claim 14 or 15 wherein the inner layer comprises a blend of from 5 to 50 weight percent styrene homopolymer and from 95 to 50 weight percent styrene/butadiene block copolymer.

17. A multilayer film according to claim 16 wherein the inner layer comprises a blend of from 10 to 30 weight percent styrene homopolymer and from 90 to 70 weight percent styrene/butadiene block copolymer.

18. A multilayer film according to claim 17 wherein the inner layer comprises a blend of from 10 to 20 weight percent styrene homopolymer and from 90 to 80 weight percent styrene/butadiene block copolymer.

19. A multilayer film according to any one of the preceding claims wherein the inner layer is a first inner layer, and wherein the film further comprises a second inner layer and a third inner layer, the second inner layer comprising a first polyolefin and the third inner layer comprising a second polyolefin, with the first inner layer being between the second inner layer and the third inner layer.

20. A multilayer film according to claim 19, wherein each of the first and second polyolefins comprises at least one member selected from the group consisting of propylene homopolymer, and propylene/ethylene copolymer containing ethylene mer in an amount of from 0.1 to 6 weight percent.

21. A multilayer film according to any one of claims 1 to 18, wherein the inner layer is a first inner layer comprising a first styrene-containing polymer, and wherein the multilayer film further comprises a second inner layer comprising polyolefin, and a third inner layer comprising a second styrene-containing polymer, with the second inner layer being between the first and third inner layers.

22. A multilayer film according to claim 21, wherein the polyolefin comprises at least one member of the group consisting of propylene homopolymer, and propylene/ethylene copolymer containing ethylene mer in an amount of from 0.1 to 6 weight percent.

23. A packaged product comprising a product surrounded by a package comprising a multilayer film according to any one of the preceding claims wherein:
the product comprises at least one member selected from the group consisting of lettuce, cabbage, broccoli, green beans, cauliflower, spinach, kale, carrot, onion, pepper, corn, radish, endive, chard, chicory, radicchio, greens, peas, squash, escarole, brussel sprout, mushroom, melon and berry.

24. A packaged product according to claim 23, wherein the multilayer film has a tear notch, so that the package is an easy-open package.

25. A packaged product according to claim 23 or 24, wherein the package is a sealed pouch having two end seals and a backseal connecting the two end seals.

26. A packaged product according to claim 25, wherein the backseal is a fin seal or a lap seal.

27. A packaging process for packaging an O₂-sensitive product, comprising:
(A) forwarding a supply of a multilayer film according to any one of claims I to 22 into a vertical form fill and seal apparatus;
(B) passing the film over a collar member of the vertical form fill and seal apparatus, so that substantially vertically-oriented edge portions of the film are adjacent one another;
(C) forming a longitudinal seal along at least a segment of the adjacent edge portions of the film, to form a sealed tube segment;
(D) collapsing a lower end portion of the sealed tube segment;
(E) forming a bottom package seal across the collapsed lower end portion of the sealed tube segment, to form a pouch;
(F) adding an appropriate quantity of the O₂-sensitive product to the pouch;
(G) collapsing an upper end portion of the pouch; and
(H) forming a top package seal across the collapsed upper end portion to form a sealed pouch containing the oxygen-sensitive product, whereby a package is formed.

28. A packaging process according to claim 27, wherein the O₂-sensitive product comprises a cut vegetable or fruit comprising at least one member selected from the group consisting of lettuce, cabbage, broccoli, green beans, cauliflower, spinach, kale, carrot, onion, pepper, corn, radish, endive, chard, chicory, radicchio, greens, peas, squash, escarole, brussel sprout, mushroom, melon and berry.

29. A packaging process according to claim 28, wherein the O₂-sensitive product comprises a cut vegetable comprising at least one member selected from the group consisting of lettuce, cabbage, broccoli, cauliflower, kale, carrot, onion, radish, endive, chard, chicory, radicchio, and escarole, and the film has an O₂-transmission rate of from 35 to 93 mm²/m²/s (3,000 to 8,000 cc/m²/24hr) STP.

30. A packaging process according to any one of claims 27 to 29, wherein the vertical form film and seal machine forms, fills, and seals at least 15 packages per minute, without substantial burn through of the film at the seals.

31. A packaging process according to claim 30, wherein the film is sealed at a temperature of from 70°C to 150°C.

## Patentansprüche

1. Mehrschichtfolie, umfassend:
(A) eine erste äußere Schicht, die ein erstes Ethylen/α-Olefin-Copolymer umfasst, wobei das erste Ethylen/α-Olefin-Copolymer homogenes Copolymer umfasst;
(B) eine innere Schicht, die thermoplastisches Elastomerpolymer umfasst, das von Styrol abgeleitete Monomereinheiten umfasst; und
(C) eine zweite äußere Schicht, die ein zweites Ethylen/α-Olefin-Copolymer umfasst, und
wobei die innere Schicht sich zwischen der ersten äußeren Schicht und der zweiten äußeren Schicht befindet, wobei sich die innere Schicht chemisch von der ersten äußeren Schicht und der zweiten äußeren Schicht unterscheidet, und die Mehrschichtfolie eine O₂-Durchlässigkeit von 5,8 bis 579 mm³/m²/s (500 bis 50 000 cm³/m²/24 h) bei Standardbedingungen (STP) und einen Modul von mindestens 414 MPa (60 000 psi) hat.

2. Mehrschichtfolie nach Anspruch 1, bei der auf der Außenseitenoberfläche der ersten äußeren Schicht eine Komponente eines oberflächenaktiven Mittels vorhanden ist, das mindestens ein Mitglied ausgewählt aus der Gruppe bestehend aus Ester von aliphatischem Alkohol, Polyether, mehrwertigem Alkohol, Ester von mehrwertigem aliphatischem Alkohol und polyethoxyiertem aromatischem Alkohol umfasst.

3. Mehrschichtfolie nach Anspruch 1 oder 2, die einen Modul von 483 bis 827 MPa (70 000 bis 120 000 psi) hat.

4. Mehrschichtfolie nach Anspruch 3, die einen Modul von 551 bis 689 MPa (80 000 bis 100 000 psi) hat.

5. Mehrschichtfolie nach einem der vorhergehenden Ansprüche, bei der die erste äußere Schicht eine Dicke von 1 bis 102 µm (0,05 bis 4 mil) hat, die innere Schicht eine Dicke von 3 bis 10 µm (0,1 bis 0,4 mil) hat, die zweite äußere Schicht eine Dicke von 1 bis 102 µm (0,05 bis 4 mil) hat und die Mehrschichtfolie eine Gesamtdicke von 13 bis 254 µm (0,5 bis 10 mil) hat.

6. Mehrschichtfolie nach Anspruch 5, bei der die erste äußere Schicht eine Dicke von 8 bis 20 µm (0,3 bis 0,8 mil) hat, die innere Schicht eine Dicke von 2,5 bis 25 µm (0,1 bis 1 mil) hat, die zweite äußere Schicht eine Dicke von 8 bis 20 µm (0,3 bis 0,8 mil) hat und die Mehrschichtfolie eine Gesamtdicke von 25 bis 76 µm (1 bis 3 mil) hat.

7. Mehrschichtfolie nach Anspruch 6, bei der die innere Schicht eine Dicke von 10 bis 20 µm (0,4 bis 0,8 mil) hat.

8. Mehrschichtfolie nach einem der vorhergehenden Ansprüche, bei der die zweite äußere Schicht ein homogenes Ethylen/α-Olefin-Copolymer umfasst.

9. Mehrschichtfolie nach einem der vorhergehenden Ansprüche, bei der das homogene Ethylen/α-Olefin-Copolymer eine Dichte von weniger als 0,915 g/cm³ hat.

10. Mehrschichtfolie nach einem der vorhergehenden Ansprüche, bei der das homogene Ethylen/α-Olefin-Copolymer Ethylenmonomer in einer Menge von 99 bis 80 Gew.% Ethylen, bezogen auf das Copolymergewicht, und ein erstes α-Olefinmonomer in einer Menge von 1 bis 20 Gew.% umfasst, bezogen auf das Copolymergewicht, und das erste α-Olefinmonomer mindestens C₄-, C₆- oder C₈-α-Olefin umfasst.

11. Mehrschichtfolie nach Anspruch 10, bei der das homogene Ethylen/α-Olefin-Copolymer Ethylenmonomer in einer Menge von 95 bis 85 Gew.%, bezogen auf das Copolymergewicht, und ein erstes α-Olefinmonomer in einer Menge von 5 bis 15 Gew.% umfasst, bezogen auf Copolymergewicht, wobei das erste α-Olefinmonomer mindestens C₈-α-Olefin oder ein Gemisch aus C₆- und C₄-α-Olefin umfasst.

12. Mehrschichtfolie nach einem der vorhergehenden Ansprüche, die eine Sauerstoffdurchlässigkeit von 23 bis 116 mm³/m²/s (2000 bis 10 000 cm³/m²/24 h) bei Standardbedingungen (STP) aufweist.

13. Mehrschichtfolie nach einem der vorhergehenden Ansprüche, bei der die innere Schicht im Wesentlichen aus dem thermoplastischen Elastomerpolymer besteht, das von Styrol abgeleitete Monomereinheiten umfasst.

14. Mehrschichtfolie nach einem der vorhergehenden Ansprüche, bei der das von Styrol abgeleitete Monomereinheiten umfassende Polymer Styrol/Butadien-Copolymer umfasst.

15. Mehrschichtfolie nach Anspruch 14, bei der das Styrol/Butadien-Copolymer Styrol/Butadien-Blockcopolymer umfasst, das 20 bis 40 Gew.% von Butadien abgeleitete Monomereinheiten umfasst.

16. Mehrschichtfolie nach Anspruch 14 oder 15, bei der die innere Schicht ein Gemisch aus 5 bis 50 Gew.% Styrolhomopolymer und 95 bis 50 Gew.% Styrol/Butadien-Blockcopolymer umfasst.

17. Mehrschichtfolie nach Anspruch 16, bei der die innere Schicht ein Gemisch aus 10 bis 30 Gew.% Styrolhomopolymer und 90 bis 70 Gew.% Styrol/Butadien-Blockcopolymer umfasst.

18. Mehrschichtfolie nach Anspruch 17, bei der die innere Schicht ein Gemisch aus 10 bis 20 Gew.% Styrolhomopolymer und 90 bis 80 Gew.% Styrol/Butadien-Blockcopolymer umfasst.

19. Mehrschichtfolie nach einem der vorhergehenden Ansprüche, bei der die innere Schicht eine erste innere Schicht ist und wobei die Folie ferner eine zweite innere Schicht und eine dritte innere Schicht umfasst, wobei die zweite innere Schicht ein erstes Polyolefin umfasst und die dritte innere Schicht ein zweites Polyolefin umfasst, wobei sich die erste innere Schicht zwischen der zweiten inneren Schicht und der dritten inneren Schicht befindet.

20. Mehrschichtfolie nach Anspruch 19, bei der jedes der ersten und zweiten Polyolefine mindestens ein Mitglied ausgewählt aus der Gruppe bestehend aus Propylenhomopolymer und Propylen/Ethylen-Copolymer umfasst, das Ethylenmonomer in einer Menge von 0,1 bis 6 Gew.% enthält.

21. Mehrschichtfolie nach einem der Ansprüche 1 bis 18, bei der die innere Schicht eine erste innere Schicht ist, die ein erstes styrolhaltiges Polymer umfasst, und wobei die Mehrschichtfolie ferner eine zweite innere Schicht, die Polyolefin umfasst, und eine dritte innere Schicht umfasst, die ein zweites styrolhaltiges Polymer umfasst, wobei sich die zweite innere Schicht zwischen der ersten und dritten inneren Schicht befindet.

22. Mehrschichtfolie nach Anspruch 21, bei der das Polyolefin mindestens ein Mitglied der Gruppe bestehend aus Propylenhomopolymer und Propylen/Ethylen-Copolymer umfasst, das Ethylenmonomer in einer Menge von 0,1 bis 6 Gew.% enthält.

23. Verpacktes Produkt, das ein Produkt umfasst, das von einer Verpackung umgeben ist, die eine Mehrschichtfolie gemäß einem der vorhergehenden Ansprüche umfasst, wobei das Produkt mindestens ein Mitglied ausgewählt aus der Gruppe bestehend aus Salat, Kohl, Broccoli, grünen Bohnen, Blumenkohl, Spinat, Grünkohl, Möhre, Zwiebel, Paprika, Mais, Rettich/Radieschen, Endivie, Mangold, Chicoree, Radicchio, Blattgemüse, Erbsen, Kürbis, Escariol, Rosenkohl, Pilz, Melone und Beere umfasst.

24. Verpacktes Produkt nach Anspruch 23, bei dem die Mehrschichtfolie eine Reißkerbe aufweist, so dass die Verpakkung eine leicht zu öffnende Verpackung ist.

25. Verpacktes Produkt nach Anspruch 23 oder 24, bei dem die Verpackung ein versiegelter Beutel mit zwei Endsiegelungen und einer rückwärtigen Siegelung ist, die die beiden Endsiegelungen verbindet.

26. Verpacktes Produkt nach Anspruch 25, bei dem die rückwärtige Siegelung eine Flossensiegelung oder überlappende Siegelung ist.

27. Verpackungsverfahren zum Verpacken eines O₂-empfindlichen Produkts, umfassend
(A) Transportieren eines Vorrats von Mehrschichtfolie gemäß einem der Ansprüche 1 bis 22 in eine vertikale Form-, Füll- und Siegelvorrichtung;
(B) Führen der Folie über ein Halselement der vertikalen Form-, Füll- und Siegelvorrichtung, so dass sich im Wesentlichen vertikal orientierte Randabschnitte der Folie nebeneinander befinden;
(C) Bildung einer längsgerichteten Siegelung entlang mindestens eines Segments der nebeneinander befindlichen Randabschnitte der Folie, um ein versiegeltes Schlauchsegment zu bilden;
(D) Zusammenbringen eines unteren Endabschnitts des versiegelten Schlauchsegments;
(E) Bilden einer Bodenverpackungssiegelung über dem zusammengebrachten unteren Endabschnitt des versiegelten Schlauchsegments, um einen Beutel zu bilden;
(F) Zugeben einer geeigneten Menge des O₂-empfindlichen Produkts in den Beutel;
(G) Zusammenbringen eines oberen Endabschnitts des Beutels; und
(H) Bilden einer oberen Verpackungssiegelung über dem zusammengebrachten oberen Endabschnitt, um einen versiegelten Beutel zu bilden, der das sauerstoffempfindliche Produkt enthält, wodurch eine Verpackung gebildet wird.

28. Verpackungsverfahren nach Anspruch 27, wobei das O₂-empfindliche Produkt ein geschnittenes Gemüse oder Obst umfasst, das mindestens ein Mitglied ausgewählt aus der Gruppe bestehend aus Salat, Kohl, Broccoli, grünen Bohnen, Blumenkohl, Spinat, Grünkohl, Möhre, Zwiebel, Paprika, Mais, Rettich/Radieschen, Endivie, Mangold, Chicoree, Radicchio, Blattgemüse, Erbsen, Kürbis, Escariol, Rosenkohl, Pilz, Melone und Beere umfasst.

29. Verpackungsverfahren nach Anspruch 28, bei dem das O₂-empfindliche Produkt ein geschnittenes Gemüse oder Obst umfasst, das mindestens ein Mitglied ausgewählt aus der Gruppe bestehend aus Salat, Kohl, Broccoli, Blumenkohl, Grünkohl, Möhre, Zwiebel, Rettich/Radieschen, Endivie, Mangold, Chicoree, Radicchio und Escariol umfasst, und wobei die Folie eine O₂-Durchlässigkeit von 35 bis 93 mm³/m²/s (3000 bis 8000 cm³/m²/24 h) bei Standardbedingungen (STP) hat.

30. Verpackungsverfahren nach einem der Ansprüche 27 bis 29, bei dem die vertikale Form-, Füll- und Siegelmaschine ohne wesentliches Durchbrennen der Folie an den Siegelungen mindestens 15 Verpackungen pro Minute formt, füllt und siegelt.

31. Verpackungsverfahren nach Anspruch 30, bei dem die Folie bei einer Temperatur von 70°C bis 150°C gesiegelt wird.

## Revendications

1. Un film multicouche, comprenant:
(A) une première couche externe comprenant un premier copolymère éthylène/alpha-oléfine, dans laquelle le premier copolymère éthylène/alpha-oléfine comprend un copolymère homogène;
(B) une couche interne comprenant un polymère élastomère thermoplastique qui comprend des unités de base dérivées du styrène; et
(C) une seconde couche externe comprenant un second copolymère éthylène/alpha-oléfine; et
dans lequel la couche interne se trouve entre la première couche externe et la seconde couche externe, la couche interne est chimiquement différente de la première couche externe et de la seconde couche externe, et le film multicouche présente une vitesse de transmission de l'oxygène comprise entre 5,8 et 579 mm³/m²/s (500 à 50 000 cm³/m²/24 h) à TPN (température et pression normales) et un module d'au moins 414 MPa (60 000 psi).

2. Un film multicouche selon la revendication 1, dans lequel un composant d'agent tensio-actif comprenant au moins un élément sélectionné parmi le groupe constitué d'un ester d'alcool aliphatique, d'un polyéther, d'un alcool polyhydrique, d'un ester d'alcool polyhydrique aliphatique et d'un alcool aromatique polyéthoxylé, est présent à la surface extérieure de la première couche externe.

3. Un film multicouche selon la revendication 1 ou 2, qui présente un module de 483 à 827 MPa (70 000 à 120 000 psi).

4. Un film multicouche selon la revendication 3, qui présente un module de 551 à 689 MPa (80 000 à 100 000 psi).

5. Un film multicouche selon l'une quelconque des revendications précédentes, dans lequel la première couche externe présente une épaisseur comprise entre 1 et 102 µm (0,05 à 4 millièmes de pouce), la couche interne présente une épaisseur comprise entre 3 et 10 µm (0,1 à 0,4 millième de pouce), la seconde couche externe présente une épaisseur comprise entre 1 et 102 µm (0,05 à 4 millièmes de pouce) et le film multicouche présente une épaisseur totale comprise entre 13 et 254 µm (0,5 à 10 millièmes de pouce).

6. Un film multicouche selon la revendication 5, dans lequel la première couche externe présente une épaisseur comprise entre 8 et 20 µm (0,3 à 0,8 millième de pouce), la couche interne présente une épaisseur comprise entre 2,5 et 25 µm (0,1 à 1 millième de pouce), la seconde couche externe présente une épaisseur comprise entre 8 et 20 µm (0,3 à 0,8 millième de pouce) et le film multicouche présente une épaisseur totale comprise entre 25 et 76 µm (1 à 3 millièmes de pouce).

7. Un film multicouche selon la revendication 6, dans lequel la couche interne présente une épaisseur comprise entre 10 et 20 µm (0,4 à 0,8 millième de pouce).

8. Un film multicouche selon l'une quelconque des revendications précédentes, dans lequel la seconde couche externe comprend un copolymère éthylène/alpha-oléfine homogène.

9. Un film multicouche selon l'une quelconque des revendications précédentes, dans lequel le copolymère éthylène/alpha-oléfine homogène présente une masse volumique inférieure à 0,915 gramme par centimètre cube.

10. Un film multicouche selon l'une quelconque des revendications précédentes, dans lequel:
le copolymère éthylène/alpha-oléfine homogène comprend des unités de base d'éthylène selon une quantité comprise entre 99 et 80 pour cent en poids d'éthylène, sur la base du poids du copolymère, et des premières unités de base d'alpha-oléfine selon une quantité comprise entre 1 et 20 pour cent en poids, sur la base du poids du copolymère, et dans lequel les premières unités de base d'alpha-oléfine comprennent au moins une alpha-oléfine en C₄, C₆ ou C₈.

11. Un film multicouche selon la revendication 10, dans lequel:
le copolymère éthylène/alpha-oléfine homogène comprend un unité de base selon une quantité comprise entre 95 et 85 pour cent en poids d'éthylène, sur la base du poids du copolymère, et un premier mère d'alpha-oléfine selon une quantité comprise entre 5 et 15 pour cent en poids, sur la base du poids du copolymère, dans lequel le premier mère d'alpha-oléfine comprend au moins de l'alpha-oléfine en C₈ ou un mélange d'alpha-oléfine en C₆ et C₄.

12. Un film multicouche selon l'une quelconque des revendications précédentes, qui présente une vitesse de transmission d'oxygène comprise entre 23 et 116 mm³/m²/s (2 000 à 10 000 cm³/m²/24 h) à TPN.

13. Un film selon l'une quelconque des revendications précédentes, dans lequel la couche interne consiste essentiellement en le polymère élastomère thermoplastique qui comprend des unités de base dérivées du styrène.

14. Un film multicouche selon l'une quelconque des revendications précédentes, dans lequel le polymère qui comprend les unités de base dérivées du styrène comprend un copolymère de styrène/butadiène.

15. Un film multicouche selon la revendication 14, dans lequel le copolymère styrène/butadiène comprend un copolymère séquencé de styrène/butadiène comprenant de 20 à 40 pour cent en poids d'unités mères dérivées du butadiène.

16. Un film multicouche selon la revendication 14 ou 15, dans lequel la couche interne comprend un mélange de 5 à 50 pour cent en poids d'homopolymère de styrène et de 95 à 50 pour cent en poids de copolymère séquencé de styrène/butadiène.

17. Un film multicouche selon la revendication 16, dans lequel la couche interne comprend un mélange de 10 à 30 pour cent en poids d'homopolymère de styrène et de 90 à 70 pour cent en poids de copolymère séquencé de styrène/butadiène.

18. Un film multicouche selon la revendication 17, dans lequel la couche interne comprend un mélange de 10 à 20 pour cent en poids d'homopolymère de styrène et de 90 à 80 pour cent en poids de copolymère séquencé de styrène/butadiène.

19. Un film multicouche selon l'une quelconque des revendications précédentes, dans lequel la couche interne est une première couche interne, et dans lequel le film comprend en outre une seconde couche interne et une troisième couche interne, la seconde couche interne comprenant une première polyoléfine et la troisième couche interne comprenant une seconde polyoléfine, la première couche interne étant située entre la seconde couche interne et la troisième couche interne.

20. Un film multicouche selon la revendication 19, dans lequel chacune des première et seconde polyoléfines comprend au moins un élément sélectionné parmi le groupe constitué d'un homopolymère du propylène et d'un copolymère propylène/éthylène contenant un unité de base selon une quantité comprise entre 0,1 et 6 pour cent en poids.

21. Un film multicouche selon l'une quelconque des revendications 1 à 18, dans lequel la couche interne est une première couche interne comprenant un premier polymère contenant du styrène, et dans lequel le film multicouche comprend en outre une seconde couche interne comprenant une polyoléfine et une troisième couche interne comprenant un second polymère contenant du styrène, la seconde couche interne étant située entre la première couche interne et la troisième couche interne.

22. Un film multicouche selon la revendication 21, dans lequel la polyoléfine comprend au moins un élément du groupe constitué d'un homopolymère du propylène et d'un copolymère propylène/éthylène contenant des unités de base selon une quantité comprise entre 0,1 et 6 pour cent en poids.

23. Un produit emballé comprenant un produit entouré d'un emballage qui comprend un film multicouche selon l'une quelconque des revendications précédentes, dans lequel:
le produit comprend au moins un élément sélectionné parmi le groupe constitué de la salade, du chou, du brocoli, des haricots verts, du chou-fleur, de l'épinard, de la betterave, de la carotte, de l'oignon, du poivre, du maïs, du radis, de l'endive, de la blette, de la chicorée, de la chicorée rouge, des légumes verts, des pois, de la courge, de la scarole, du chou de Bruxelles, du champignon, du melon et de baies.

24. Un produit emballé selon la revendication 23, dans lequel le film multicouche comporte une entaille d'ouverture, de telle sorte que l'emballage est un emballage facile à ouvrir.

25. Un produit emballé selon la revendication 23 ou 24, dans lequel l'emballage est un sac scellé qui comporte deux scellements d'extrémité et un scellement de fond qui relie les deux scellements d'extrémité.

26. Un produit emballé selon la revendication 25, dans lequel le scellement de fond est un scellement en ailette ou un scellement de recouvrement.

27. Un procédé d'emballage pour emballer un produit sensible à l'oxygène, comprenant:
(A) l'avancement d'une alimentation en un film multicouche selon l'une quelconque des revendications 1 à 22 dans un appareil vertical de formage, de remplissage et de scellement;
(B) le passage du film sur un élément du col de l'appareil vertical de formage, de remplissage et de scellement de telle sorte que des parties latérales substantiellement orientées verticalement du film soient adjacentes l'une à l'autre;
(C) la formation d'un scellement longitudinal le long d'au moins un segment des parties latérales adjacentes du film, afin de former un segment de tube scellé;
(D) l'écrasement d'une partie de l'extrémité inférieure du segment de tube scellé;
(E) la formation d'un scellement de fond d'emballage d'un côté à l'autre de la partie de l'extrémité inférieure écrasée du segment de tube scellé, afin de former un sac;
(F) l'addition d'une quantité appropriée du produit sensible à l'oxygène au sac;
(G) l'écrasement d'une partie de l'extrémité supérieure du sac; et
(H) la formation d'un scellement de la partie haute de l'emballage d'un côté à l'autre de la partie d'extrémité supérieure écrasée afin de former un sac scellé contenant le produit sensible à l'oxygène, de manière à former un emballage.

28. Un procédé d'emballage selon la revendication 27, dans lequel le produit sensible à l'oxygène comprend un légume ou un fruit coupé qui comprend au moins un élément sélectionné parmi le groupe constitué de la salade, du chou, du brocoli, des haricots verts, du chou-fleur, de l'épinard, de la betterave, de la carotte, de l'oignon, du poivre, du maïs, du radis, de l'endive, de la blette, de la chicorée, de la chicorée rouge, de légumes verts, de pois, de la courge, de la scarole, du chou de Bruxelles, du champignon, du melon et de baies.

29. Un procédé d'emballage selon la revendication 28, dans lequel le produit sensible à l'oxygène comprend un légume coupé qui comprend au moins un élément sélectionné parmi le groupe constitué de la salade, du chou, du brocoli, du chou-fleur, de la betterave, de la carotte, de l'oignon, du radis, de l'endive, du chou frisé, de la chicorée, de la chicorée rouge et de la scarole, et dans lequel le film présente une vitesse de transmission de l'oxygène comprise entre 35 et 93 mm³/m²/s (3 000 à 8 000 cm³/m²/24 h) à TPN.

30. Un procédé d'emballage selon l'une quelconque des revendications 27 à 29, dans lequel la machine verticale de formage, de remplissage et de scellement, forme, remplit et scelle au moins 15 emballages par minute, sans brûler de façon substantielle le film aux points des scellements.

31. Un procédé d'emballage selon la revendication 30, dans lequel le film est scellé à une température comprise entre 70 °C et 150 °C.
